# EUROPEAN PATENT APPLICATION

(11) **EP 2 629 507 A2**
(43) Date of publication of application: **21.08.2013**
(21) Application number: 13155084.0
(22) Date of filing: 13.02.2013
(51) Int. Cl.: H04N 5/232

(54) **Image-taking method and camera apparatus**

(30) Priority: 15.02.2012 KR 20120015523
(71) Applicant: Samsung Electronics Co., Ltd, Gyeonggi-do 443-742 (KR)
(72) Inventor: An, Seungwook, 443-742 Gyeonggi-do (KR); Kim, Myoungwon, 443-742 Gyeonggi-do (KR); Kim, Soojin, 443-742 Gyeonggi-do (KR); ParkARK, Hyunho, 443-742 Gyeonggi-do (KR); Baek, Woohyun, 443-742 Gyeonggi-do (KR); Lee, Sungkoo, 443-742 Gyeonggi-do (KR); Lee, Haesun, 443-742 Gyeonggi-do (KR); Cho, Minkeun, 443-742 Gyeonggi-do (KR)
(74) Representative: Gover, Richard Paul

(57) **Abstract**

An image-taking method and a camera apparatus arranged to implement the method. The method comprises: acquiring images from a camera unit at a frame rate with one image per frame period; converting the acquired images to viewing images and compressed images; and buffering the compressed images while displaying the viewing images on a display unit.

## Description

### BACKGROUND OF THE INVENTION

### Field of the Invention:

The present invention relates to an image-taking method and a camera apparatus. In certain embodiments the camera apparatus may comprise a portable terminal including a camera unit and arranged to implement the method. In particular, certain embodiments relate to an apparatus and method for processing high-pixel data in a camera, which may be implemented within a portable terminal.

### Description of the Related Art

A camera apparatus and portable terminal (alternatively referred to herein as a mobile terminal) equipped with a camera unit are capable of processing high quality images and providing various user convenience functions. A camera apparatus in the prior art is equipped with an image sensor or camera sensor capable of processing full High Definition (HD) or higher resolution images.

Such a camera apparatus may display the image sensed by the camera sensor in a preview mode and save the image acquired by the camera sensor in response to the push on a shutter button. In the prior art, there exists shutter delay or shutter lag between the shutter release timing and full size image capture timing. That is, there is a time difference between the shutter-release time and when the subject is captured by the camera sensor. This time difference is caused by the processing time of the Image Signal Processor (ISP). Accordingly, camera apparatuses in the prior art and a mobile terminal in the prior art equipped with a camera have a drawback when acquiring an image at an intended time point due as the image subject may have moved or changed before the subject is captured by the camera sensor, due to the shutter delay (or shutter lag).

Also, if any defect occurred at the time that the image has been taken, such as camera shaking or an unnecessary behaviour of the picture model (e.g. closed eyes), is found later, it is difficult to correct the defect because the situation in the image taken in the past cannot be staged identically.

### SUMMARY OF THE INVENTION

It is an aim of certain embodiments of the invention to solve, mitigate or obviate, at least partly, at least one of the problems and/or disadvantages associated with the prior art. Certain embodiments aim to provide at least one of the advantages described below.

Certain embodiments of the present invention provide an apparatus and method for capturing an image at a shutter-on (or shutter-release) time, for a camera apparatus or a portable terminal equipped with a camera unit. Certain embodiments of the present invention also include an apparatus and method for recording an image selected among the images captured by the camera apparatus or a portable terminal equipped with a camera unit. Certain embodiments of the present invention also include an apparatus and method for acquiring shooting information of a camera and sensors associated with an image and processing the information along with the image.

For this purpose, according to certain exemplary embodiments of the present invention, a camera apparatus or a portable terminal equipped with a camera may process an image acquired by using the camera sensors to generate a plurality of images per frame and may handle the generated images as preview images and capture images.

According to certain exemplary embodiments of the present invention, the camera apparatus or the portable terminal equipped with a camera may acquire shooting information from the camera and sensors for every frame and may process the shooting information along with the images.

According to a first aspect of the present invention there is provided an image-taking method, the method comprising: acquiring images from a camera unit at a frame rate with one image per frame period; converting the acquired images to viewing images and compressed images; and buffering the compressed images while displaying the viewing images on a display unit.

According to a second aspect of the present invention there is provided a camera apparatus comprising: a camera unit arranged to acquire images at a frame rate with one image per frame period; a processing unit arranged to convert the acquired images to viewing images and compressed images and to buffer the compressed images; and a display unit arranged to display the viewing images output by the application processor.

In accordance with one embodiment of the present invention, an image-taking method of a portable terminal includes acquiring images from a camera sensor at every frame in a camera operation mode; converting the images to viewing images and compressed images; generating shooting information of the images; outputting the viewing and compressed images and shooting information by frame; displaying the viewing images on a display unit; and buffering the compressed images and the shooting information.

In accordance with another embodiment of the present invention, a portable terminal includes a camera unit which acquires images from a camera sensor in a camera operation mode; an image processor which processes the images acquired from the camera sensor to generate viewing images and compressed images, receives shooting information from the camera unit, and outputs the viewing and compressed images and shooting information in a single frame; an application processor which processes the viewing images and buffers the compressed images and shooting information; and a display unit which displays the viewing images.

In accordance with another embodiment of the present invention, a camera includes a camera unit which acquires images from a camera sensor at every frame period in a camera operation mode; a sensor unit having at least one sensor; a processing unit which processes the images acquired by the camera unit to generate viewing images and compressed images, acquires shooting information from an output of the camera unit and the sensor unit in taking images, processes the viewing images to be displayed, and buffers the compressed images and the shooting information; and a display unit which displays the viewing images.

In accordance with still another embodiment of the present invention, a portable terminal includes a communication unit which is responsible for radio communication with an external device; a terminal controller which controls voice calls and communications of the portable terminal apparatus by using the communication unit; a camera unit which acquires images from a camera sensor at every frame in a camera operation mode; a sensor unit which has at least one sensor and generates sensor information; an image processor which processes the images acquired from the camera unit to generate viewing images and compressed images, generates shooting information with information from the camera unit in capturing images, and outputs the viewing and compressed images and the shooting information in a single frame; an application processor which communicates with the terminal controller, processes communication applications, processes the viewing images to be displayed, and buffers the viewing and compressed images and shooting information respectively; and a display unit which displays the viewing images.

A camera apparatus or portable terminal equipped with a camera according to certain embodiments of the present invention is capable of acquiring the images taken by the camera sensor in every frame to acquire a plurality of images and shooting information and selecting a preferred image using the shooting information. Accordingly, a camera apparatus and portable terminal equipped with a camera in accordance with certain embodiments is capable of realizing a zero shutter lag by capturing images at an intended timing and saving the correct images selected among the captured images.

Another aspect of the invention provides a computer program comprising instructions arranged, when executed, to implement a method and/or apparatus in accordance with any one of the above-described aspects. A further aspect provides machine-readable storage storing such a program.

### BRIEF DESCRIPTION OF THE DRAWINGS

FIG. 1 is a block diagram illustrating the configuration of a camera apparatus or a portable terminal according to an exemplary embodiment of the present invention;
FIG. 2 is a block diagram illustrating the configuration of a camera unit forming part of the camera apparatus of FIG. 1;
FIG. 3 is a block diagram illustrating the configuration of an ISP and an AP forming part of the camera apparatus of FIG. 1;
FIG. 4A is a diagram illustrating the structure of an image frame generated by an ISP according to an exemplary embodiment of the present invention;
FIG. 4B is a diagram illustrating the format of a frame consisting of a YUV image, a JPEG image, and shooting information according to an exemplary embodiment of the present invention;
FIG. 4C is a diagram illustrating the data transfer format of each frame according to an exemplary embodiment of the present invention;
FIG. 5 is a diagram illustrating a configuration of viewing and compressed images and shooting information buffers according to an exemplary embodiment of the present invention;
FIG. 6 is a block diagram illustrating a configuration of a camera apparatus according to an alternative exemplary embodiment of the present invention;
FIG. 7 is a block diagram illustrating the configuration of an ISP and an AP forming part of the camera apparatus of FIG. 6;
FIG. 8 is a block diagram illustrating the configuration of a camera apparatus processing an image and having a single processing block according to an exemplary embodiment of the present invention;
FIG. 9 is a block diagram illustrating the configuration of a processing block forming part of the camera apparatus of FIG. 8;
FIG. 10 is a flowchart illustrating a procedure for processing viewing and compressed images at every frame in the camera apparatus according to an exemplary embodiment of the present invention;
FIG. 11 is a flowchart illustrating a procedure for storing a compressed image selected by the user while displaying thumbnail images of images captured according to the embodiment of FIG. 10;
FIG. 12 is a flowchart illustrating a procedure for processing viewing and compressed images and shooting information at every frame within a camera apparatus according to an exemplary embodiment of the present invention;
FIG. 13 is a flowchart illustrating a procedure for storing a compressed image selected by a user while displaying the shooting information of FIG. 12;
FIGS. 14A and 14B are illustrate a method for improving flash timing with flash information of shooting information according to an exemplary embodiment of the present invention;
FIG. 15 is a block diagram illustrating the structure of a buffer for buffering the compressed images according to an exemplary embodiment of the present invention;
FIG. 16 is a flowchart illustrating a procedure for capturing images taken without shaking using shooting information according to an exemplary embodiment of the present invention; and
FIG. 17 is a block diagram illustrating a configuration of a portable terminal apparatus equipped with a camera apparatus according to another alternative exemplary embodiment of the present invention.

### DETAILED DESCRIPTION OF THE INVENTION

Exemplary embodiments of the present invention are described with reference to the accompanying drawings in detail. The same reference numbers are used throughout the drawings to refer to the same or like parts.

Although detailed features such as the number of pixels within an image, a meta data item, and data size are presented in the following description, it will be obvious to those skilled in the art that these features are given as examples only to help understand the invention but not restrict the present invention. In the following description, a detailed description of well-known functions and structures incorporated herein may be omitted to avoid obscuring the subject matter of the present invention. This invention may, however, be embodied in many different forms and should not be construed as limited to the exemplary embodiments set forth herein. Also, terms described herein, which are defined considering the functions of the present invention, may be implemented differently depending on user and operator's intention and practice. Therefore, the terms should be understood on the basis of the disclosure throughout the specification. The principles and features of this invention may be employed in varied and numerous embodiments without departing from the scope of the invention.

Furthermore, although the drawings represent exemplary embodiments of the invention, the drawings are not necessarily to scale and certain features may be exaggerated or omitted in order to more clearly illustrate and explain the present invention.

Among the terms set forth herein, an electronic device refers to any kind of device capable of processing data which is transmitted or received to or from any external entity. The electronic device may display icons on a screen to which stored data and various executable functions are assigned or mapped. The electronic device may include a computer, a notebook, a tablet PC, a portable or mobile device, and the like. The following description illustrates an embodiment of the present invention in which the example electronic device is a portable terminal, and specifically a smart phone.

Among the terms set forth herein, a screen refers to a display unit or other output device which visually displays information to the user, and which optionally is capable of receiving and electronically processing tactile inputs from a user using a stylo, a finger of the user, or other techniques for conveying a user selection from the user to the output device. The following description illustrates an embodiment of the present invention in which the example screen is a touch screen.

The present invention relates to a camera apparatus or a portable terminal apparatus equipped with a camera which is capable of generating a plurality of images by processing images acquired by the image sensor of the camera and generating shooting information from information acquired by sensors of the camera and/or the portable terminal. Here, the plurality of images can be viewing images to be shown on a display unit and compressed images to be stored in a storage unit. The shooting information can be information acquired from sensors of the camera and/or the portable terminal when the images are taken by a camera in a corresponding frame (hereinafter, the term "shooting information" is interchangeable with the terms "meta data" and "embedded data"). A compressed image is obtained from still images compressed for storage, and the terms "captured image" and "compressed image" can be used interchangeably.

A viewing image can be a YUV image adjusted (cropped and/or scaled) to fit the size of a display unit. A compressed image is a camera's full-resolution image (e.g. Full High Definition (FHD), Ultra High Definition (UHD), or higher resolution image) coded in compressed data, with the description herein referring as one example to a JPEG image in an exemplary embodiment of the present invention. According to the exemplary embodiment of the present invention, the viewing image is a preview image of the YUV image scaled from the camera's full-resolution image, and the compressed image is a coded JPEG image compressed or acquired by compressing in size the viewing image.

Shooting information is information acquired from sensors of the camera or portable terminal when taking an image in association with respective images of every frame. Typically, the camera apparatus has only the information used to set the camera sensor such as Exchangeable Image File Format (exif) data. The exif data may include information on a camera maker, a camera model, an image editor such as software, a picture modification date such as a date and/or time parameter, an Exif Version, a shoot date such as a shooting date and/or time, an image size, an exposure time representing a shutter speed, an exposure program, a focal length, and a diaphragm aperture (F-number). However, the memory space for storing the information is limited and available only for the captured image. The present invention provides an apparatus and method for acquiring shooting information from sensors of the camera and/or the portable terminal and efficiently selecting and processing the images using the shooting information.

A camera apparatus or a portable terminal equipped with a camera according to an exemplary embodiment of the present invention processes the images of every frame that are acquired by the camera, e.g. in preview mode, to generate the viewing images and compressed images.

In this case, the camera apparatus acquires images by using the camera at every frame period and converts the acquired images to the viewing images and compressed images, the viewing images being displayed on the display unit and the compressed images being buffered. If a capture request (i.e. recording request) is input by the user, the camera apparatus selects and stores the compressed image at the time point when the capture request is input among the compressed images in the buffer. In this case, the images at the shutter-on (shutter-release) time selected by the user can be selected and stored to solve the shutter delay problem, i.e. making it possible to realize zero shutter lag. If a user capture request occurs, the buffered compressed images are displayed such that the compressed image selected by the user is stored. In this case, it is possible to store the image selected by the user among the images buffered at the shutter-on timing.

A camera apparatus or a portable terminal equipped with a camera according to an alternative exemplary embodiment of the present invention generates viewing images and compressed images by processing the images of the frame acquired by the camera sensor at every frame period and acquires the shooting information from the sensors of the camera and/or the portable terminal at the image acquisition time.

While a camera is operating, the camera acquires images at every frame period and the shooting information from the sensors of the camera and/or portable terminal at the image acquisition time simultaneously while converting the acquired images to the viewing and compressed images. Afterward, the camera apparatus displays the viewing image on the display unit and buffers the compressed images and shooting information. If the images are acquired at every frame, the camera generates the compressed images and shooting information and processes the compressed images and shooting information frame by frame.

Here, the camera outputs the camera's full-resolution image, the viewing image is a YUV image scaled to be displayed on the display, the compressed image is a JPEG image compressed in size, and the shooting information may include all or some of the camera information, the flash information, any location information generated by the sensors of the camera, and/or portable terminal state information which may include information generated by a gyro sensor, an acceleration sensor, an altitude sensor, a direction sensor, etc.

If a capture request is input by the user, the camera apparatus is capable of storing the compressed image selected among the buffered compressed images at the capture-requested time, the compressed image selected among the buffered compressed images, or the compressed image corresponding to the shooting information selected among the presented shooting information.

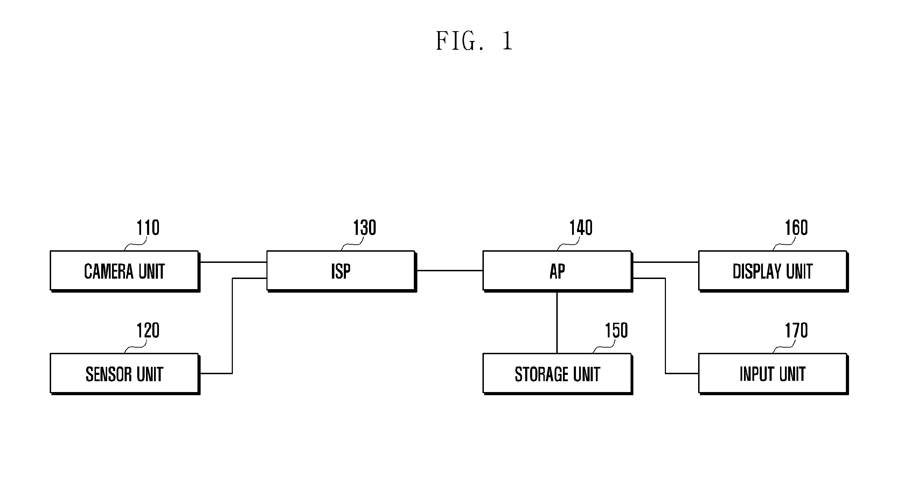

The present invention will now be described with reference to the drawings. FIG. 1 is a block diagram illustrating the configuration of a camera apparatus, which may form part of a portable terminal, according to an exemplary embodiment of the present invention.

Referring to FIG. 1, the apparatus comprises a camera unit 110 and an image sensor 120. The sensor unit 120 may be incorporated in or connected to the camera unit 110, for taking images while the camera is operating. Alternatively, as illustrated the sensor unit 120 may be separately connected to an image signal processor. The sensor unit 120 may include at least one sensor mounted on or associated with the camera apparatus such as a Global Positioning System (GPS) receiver, a gyro sensor, an acceleration sensor, an altitude sensor, and a direction sensor.

An Image Signal Processor (ISP) 130 processes images acquired from the camera unit 110 to display a viewing image on a display unit 160 and to store a compressed image in a storage unit 150 in response to an image capture request received from a user. The viewing image can be a YUV image. YUV is a colour emission format (colour space) in which Y denotes brightness (luminance), U and V denote chrominance, i.e. U for a difference between luminance and a blue component (Y-B) and V for a difference between luminance and a red component (Y-R). The ISP 130 performs colour conversion on an image acquired from the camera unit 110 to generate the YUV image and adjusts the image in size (scaling and/or crop) to fit the YUV image to the display unit 160. That is, the ISP 130 generates the YUV image and scales the YUV image to fit the display capability of the display unit 160. The ISP 130 also performs coding on the image output by the camera unit 110 to generate the compressed image. Here, a compressed image is an image to be stored in response to a capture request received from a user and may be an image generated by compression-encoding a full-resolution image output by the camera unit 110 according to a predetermined coding scheme. The full-resolution image output by the camera unit 110 can be an image having an appropriate number of pixels for UHD or higher resolution, and the coder can be a JPEG coder.

The ISP 130 also acquires shooting information for the image from the camera unit 110 and the sensor unit 120. The shooting information may include supplementary information in addition to the exif information acquired when the camera unit 110 takes an image. The supplementary information can be any information acquired from the sensor unit 120.

The ISP 130 is capable of generating the viewing image and the compressed image at every frame period. That is, the frame period is longer than the time taken to generate each viewing image and compressed image. The ISP 130 may also capable of acquiring the shooting information at every frame period. The ISP 130 may be capable of generating viewing images and compressed images (or viewing and compressed images and shooting information) with a frame rate of 30 frames per second (30 fps) or higher (e.g. 60 fps)

The Application Processor (AP) 140 controls buffering of the viewing and compressed images (or viewing and compressed images and shooting information) generated by the ISP 130 and controls the display of the viewing images on the display unit 160 while the camera is operating. If a user's capture request (save request) command is detected, the AP 140 stores a compressed image while fulfilling predetermined conditions among the buffered compressed images (e.g. frame images corresponding to the shutter-on time (i.e. a user's capture request time)) in the storage unit 150.

The input unit 170 is capable of generating a camera drive command and a capture request command which are output to the AP 140. The input unit 170 is also capable of generating a command requesting a display of the shooting information and thumbnail images of the compressed images stored in the buffer in response to user input. Here, the camera drive command can be a camera power-on or a camera turn-on input, and the capture command can be a shutter-on or shutter-release input. The display unit 160 displays the viewing image output by the AP 140 in a preview mode. The display unit 160 is also capable of displaying the shooting information and/or thumbnail images output by the AP 140 in a capture mode. Here, the input unit 170 can be a touch panel capable of detecting a user's touch input, and the display unit 160 can be an LCD or OLED panel for displaying the data and an image generated by the execution of a program. Here, the input unit 170 and the display unit 160 can be integrated into a touchscreen. The input unit 170 may also include buttons arranged on or extending from an exterior of the camera apparatus.

The storage unit 150 stores the compressed image (or compressed image and shooting information) buffered by the AP 140 in response to the capture request.

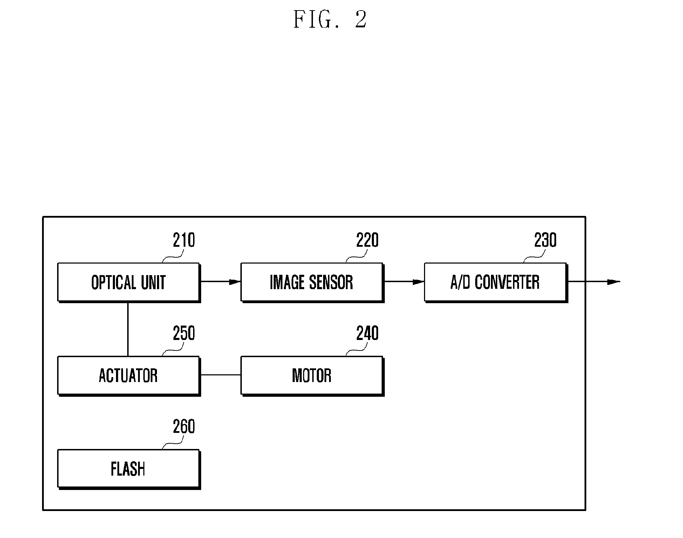

FIG. 2 is a block diagram illustrating the configuration of the camera unit 110 according to an exemplary embodiment of the present invention.

Referring to FIG. 2, if a camera drive command is generated, the camera unit 110 powers on. The ISP 130 drives the motor 240, and the actuator 250 controls the operation of the optical unit 210. Here, the operation of the optical unit 210 may include zooming and focusing operations. The optical unit 210 takes or captures an image around a shooting time, and generates an optical signal corresponding to or encoding the image, and the image sensor 220 senses the image taken by the optical unit 210 and converts the optical signal of the image to an electric signal. Alternatively or in addition, the optical unit 210 outputs light, for example, for focusing operations, and the image sensor 220 converts the light emitted by the optical unit 210 to an electric signal and generates a corresponding image signal. Here, the image sensor 220 can be any known image sensor supporting FHD, UHD, or higher resolution. In the following description, the term "full-resolution" denotes the maximum resolution which the image sensor 200 supports. The image sensed by the image sensor 220 is converted to a digital image by the A/D converter 230 and then transferred to the ISP 130. The flash 260 can be driven by the ISP 130 to generate a flash of light for imaging and optical operations.

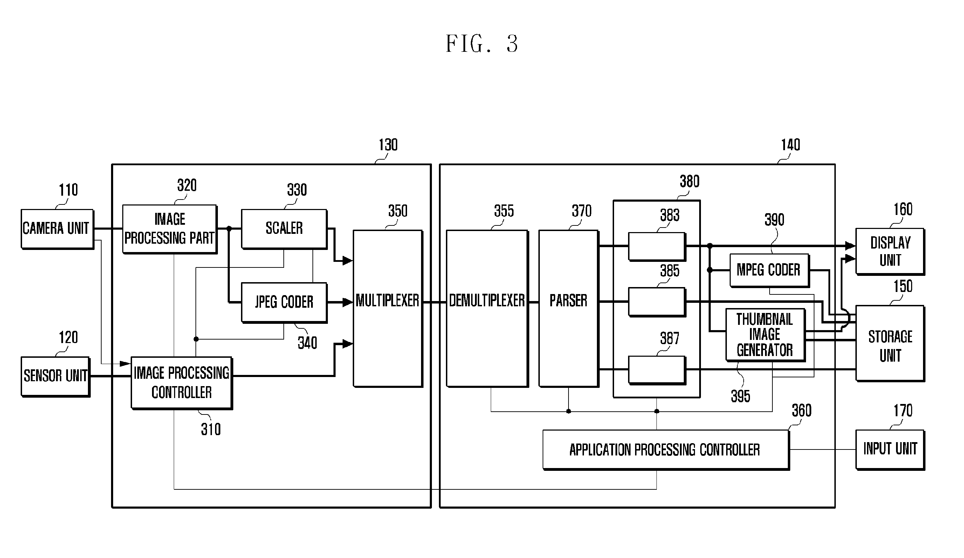

FIG. 3 is a block diagram illustrating the configuration of the ISP 130 and AP 140 according to the exemplary embodiment of the present invention.

Referring to FIG. 3, the image processing part 320 of the ISP 130 converts the image output by the camera unit 110 to a YUV image. Here, the image processing part 320 may include a pre-processing part and a post-processing part. In this case, the pre-processing part performs pre-processes the image acquired from the camera unit 110, and the pre-processing may include 3A (Auto White Balance (AWB), Auto Exposure (AE), and Auto Focusing (AF)) extraction and processing, lens shading correction, dead pixel correction, bad pixel compensation, etc., while the post-processing part performs colour interpolation, noise removal, colour compensation, and image conversion to generate YUV data. The image output by the camera unit 110 is a raw image having a number of pixels corresponding to the full-resolution supported by the image sensor 220, and the image processing part 320 processes the image to generate a YUV image that can be displayed on the display unit 160.

The ISP 130 also includes a still image compressor (still image coder) 340 identified in FIG. 3 as a JPEG coder for storing still images. The still image compressor 340 is capable of supporting various still image coding methods such as JPEG and TIFF. In an exemplary embodiment of the present invention, the still image compressor 340 is a JPEG coder. The JPEG coder 340 compresses the image output by the image processing part 320 into a JPEG image. The scaler 330 scales the image output by the image processing part 320 to a size to fit the display unit 160. The scaler 330 is capable of at least one of scaling, cropping, and resizing image components. In the case that the image processing part 320 does not perform a colour conversion function, the scaler 330 can be implemented as a viewing image generator and, in this case, the viewing image generator may include a colour converter for converting the raw image to a YUV image and for performing scaling functions.

The image processing controller 310 controls the operation of the camera unit 110 and general operations of the ISP 130 in the camera operation mode under the control of the application processing controller 360. The image processing controller 310 is also capable of generating shooting information using information or data associated with the image taken by the camera unit 110 and/or generated by the sensor unit 120 while the camera unit 110 is operating. The image processing controller 310 controls the generation of the compressed images and viewing images (or compressed and viewing images and shooting information) of a corresponding frame at every frame period, for example at a frame rate of, 30 or 60 frames per second.

The multiplexer 350 multiplexes the compressed and viewing images (or compressed and viewing images and shooting information) and transfers the multiplexed result to the AP 140 under the control of the image processing controller 310.

In addition, the ISP 130 may include a thumbnail image generator for converting the viewing images to thumbnail images. In this case, the ISP 130 generates thumbnail images from viewing images, and the JPEG coder 340 compresses the output of the image processing part 320 and may generate a compressed image including a header of the compressed image, the thumbnail image, and the compressed JPEG image.

In the configuration of the AP 140, the application processing controller 360 controls the operation of the ISP 130 according to a command received from the input unit 170, and controls the buffering and display of images output by the ISP 130 on the display unit 160, and stores the buffered compressed images in the storage unit 150 when a capture command is detected.

The demultiplexer 355 demultiplexes and outputs the viewing and compressed images (or viewing and compressed images and shooting information) from the ISP 130 under the control of the application processing controller 360. The parser 370 parses the images and information demultiplexed by the demultiplexer 355 into the viewing and compressed images (or viewing and compressed images and shooting information). In an alternative exemplary embodiment, when the application processing controller 360 controls the demultiplexer 355 to perform software parsing on the output of the ISP 130 to acquire the viewing and compressed images (or viewing and compressed images and shooting information), the parser 370 can be omitted.

The buffer 380 may include a viewing image buffer 383 and a compressed image buffer 385 (or viewing image buffer 383, compressed image buffer 385, and shooting information buffer 387). The buffer 380 buffers the parsed viewing and compressed images (or viewing and compressed images and shooting information) under the control of the application processing controller 360. Here, the buffer 380 has a size capable of buffering the viewing and compressed images (or viewing and compressed images and shooting information) of N frames and can be configured, for example, in a ring buffer structure. The reason for configuring buffer 380 as a ring buffer structure is to restrict the images and information of the received frames to a predetermined number.

The AP 140 may include a motion image compressor (motion image coder) 390 identified as an MPEG coder in FIG. 3 for compressing motion image data in response to a motion image save request. The motion image compressor 390 may include various known motion picture coders such as H.264 and MPEG coders. In an exemplary embodiment of the present invention, the motion picture compressor 390 is an MPEG coder. If a motion picture save request is input by the user, the application processing controller 360 drives the MPEG coder 390 to compress the viewing images buffered in the viewing image buffer 383 of the buffer 380 and to store the compression result in the storage unit 150.

The AP 140 may include a thumbnail image generator 395 for generating thumbnail images by resizing the viewing images. The thumbnail image generator 395 resizes the viewing image output from the viewing image buffer 383 to generate the thumbnail image which may include a JPEG image and which may be displayed on the display unit 160 under the control of the application processing controller 360.

While capturing an image, the ISP 130 continues generating the viewing and compressed images (or viewing and compressed images and shooting information), and the AP 140 may control the display unit 160 to display the compressed and viewing images simultaneously. For example, the AP 140 is capable of displaying the captured image as thumbnail image on the display unit 160 while displaying the viewing image as a preview image in the capture mode. In contrast, the AP 140 is capable of displaying the viewing image as thumbnail motion picture on the display unit 160 while displaying the captured image on the display unit in the capture mode. That is, the AP 140 is capable of generating the thumbnail image using the viewing image and storing the JPEG header, thumbnail image, and compressed images as a compressed image of the corresponding frame in the capture mode. In the exemplary embodiment of the present invention, the AP 140 is capable of displaying the viewing and captured images on the display unit 160 simultaneously in the capture mode and, in this case, one image such as a viewing image or a capture image can be displayed as a thumbnail image. In the capture mode, the AP 140 is also capable of decoding the compressed images of the corresponding frame and then displaying the decoded images as still images on the display unit 160. At this time, the captured compressed image can be the compressed image of the frame configured in consideration of the shutter delay of the camera apparatus, and the application processing controller 360 is capable of selecting the compressed image of the configured frame among the compressed images buffered in the compressed image buffer 385 to store the selected compressed images in the storage unit 150 in response to the capture request.

In FIG. 3, the still and motion image compression components of the ISP 130 and AP 140 are configured as coders. However, the image compression and decompression components can be integrated into a single chip of a Coder and Decoder (CODEC). Accordingly, the still image coder 340 (e.g. JPEG coder) of the ISP 130 can be configured as a still image codec such as a JPEG codec, and the motion image coder 390 (e.g. the MPEG coder 390) of the AP 140 can be configured as a motion picture codec such as a MPEG codec. In the exemplary embodiment of the present invention, the description is directed to the operation of displaying and storing images taken by the camera unit 110. In addition, embodiments of the present invention allow for decompressing and displaying a still image (e.g. JPEG image) stored in the storage unit 150. For this purpose, the AP 140 may include a still image decoder (or still image codec) known in the art. In this case, if the user requests a playback of the compressed images stored in the storage unit 150 by using the input unit 170, the AP 140 decodes (decompresses) the compressed image by using the still image decoder to display the decoded image on the display unit 160. The operation for decoding and displaying the still image using such a known still image decoder or codec is performed in a manner known in the art.

In the configuration of FIG. 3, the ISP 130 is capable of generating a viewing image for preview, and of generating a compressed image for capture from the image output by the camera unit 110, or generating the viewing and compressed images and shooting information.

First, a description is made of the viewing and compressed image processing operation in accordance with an exemplary embodiment of the present invention.

If the user inputs a camera drive command by using the input unit 170, the application processing controller 360 notifies the ISP 130 of such an inputted camera drive command, and the image processing controller 310 drives the camera unit 110. The image output by the camera unit 110 is input to the image processing part 320. The image processing part 320 converts the raw image from the camera unit 110 to a YUV image and, in this case, the image can be the camera unit's full-resolution image. The JPEG coder 340 compresses the image output from the image processing part 320 in the JPEG format to generate the compressed image, and the scaler 330 scales (and/or resizes) the image output from the image processing part 320 into the viewing image to be displayed on the display unit 160. The multiplexer 350 multiplexes the compressed image and the viewing image, and outputs the multiplexed image to the AP 140 under the control of the image processing controller 310.

Here, the ISP 130 generates the viewing and compressed images of each frame at every frame period at the frame rate of, for example, 30 fps or 60 fps.

The demultiplexer 355 demultiplexes the multiplexed viewing and compressed images, and the parser 370 parses the multiplexed images into the viewing and compressed images. The parsed viewing image is buffered in the viewing image buffer 383 of the buffer 380 and is displayed on the display unit 160 simultaneously under the control of the application processing controller 360. The compressed image is buffered in the compressed image buffer 385 of the buffer 380 under the control of the application processing controller 360.

Here, the compressed images buffered in the compressed image buffer 385 can be used for compensating for the shutter delay (shutter lag) of the camera apparatus and for selecting the user intended image among the buffered compressed images in response to the user's capture request.

If the capture request is input by the user, the AP 140 is capable of capturing the compressed image for compensating the shutter delay among the compressed images buffered in the compressed image buffer 385. The image presented on the display unit 160, such as through a view finder of camera apparatus, at the time when the user's capture request is detected by the camera apparatus may differ from the image captured by the camera unit 110 at that time. In an exemplary embodiment of the present invention, the application processing controller 360 selects the compressed images of the frame compensating for the shutter delay among the compressed images being buffered in the compressed image buffer 385 and saves the selected image in the storage unit 150 when the capture request is detected, in order to realize a zero shutter lag. For example, if the shutter delay is 3 frames, the application processing controller 360 selects the compressed images 3 frames earlier at the time of the capture request among the compressed images buffered in the compressed image buffer 385 and stores the selected image in the storage unit 150.

Second, when the user's capture request is detected, the image or photo to be captured may not be taken normally. In an exemplary case of a human picture, the picture model may close his or her eyes or the camera may have been shaken. In this case, it is preferred to capture another compressed image. In an exemplary embodiment of the present invention, the AP 140 generates thumbnail images of the compressed images buffered in the compressed image buffer using the viewing images. That is, the thumbnail image generator 395 of the AP 140 resizes (scales and/or crops) the viewing image output from the viewing image buffer 383 to generate thumbnail images. Afterward, if a capture request is input, the application processing controller 360 displays the thumbnail images on the display unit 160 to store the compressed image in the storage unit 150, with the stored image corresponding to the thumbnail image selected by the user. In an exemplary embodiment of the present invention, the viewing images are buffered in the viewing image buffer 383. Accordingly, when the capture request is input, the viewing images that are being buffered in the viewing image buffer 383, other than the thumbnail images, are displayed on the display unit 160 in a post view mode such that the user selects one among the viewing images displayed on the display unit 160 to store the selected image in the storage unit 150. Alternatively, a frame compressed image may include a header, a thumbnail image, and a compressed image, and the application processing controller 360 may be capable of displaying thumbnail images corresponding to the compressed images stored in the compressed image buffer 385 in response to the capture request and, in this case, the user can select a required image from the displayed thumbnail images.

As described above, the method according to an exemplary embodiment of the present invention is capable of processing an image generated by the camera unit 110 at every frame period in a preview mode to generate viewing images and compressed images, buffering the viewing and compressed images at predetermined frame rate, and storing compressed images selected from the buffered compressed images at a capture request time point or at a predetermined time point, thereby realizing zero shutter lag, by a user checking thumbnail images corresponding to the compressed images being buffered or corresponding to the viewing images.

In an exemplary embodiment of the present invention, the shooting information may optionally not be used. In this case, a JPEG image (the compressed image) may include exif data. In this case, the shooting information buffer 387 of the buffer 380 may not be used.

There will now be described a viewing and compressed image and shooting information processing operation in accordance with an alternative exemplary embodiment of the present invention.

If a user's camera drive command is input through the input unit 170 (i.e. if the preview mode is executed), the application processing controller 360 notifies the ISP 130 of such an inputted camera drive command, and the image processing controller 310 drives the camera unit 110. The image output from the camera unit 110 is input to the image processing part 320.

At this time, the ISP 130 generates viewing images, compressed images, and shooting information at every frame period. Here, the ISP 130 may generate the images at the frame rate of 30 fps or higher (e.g. 60 fps). At this time, the image processing part 320 performs 3A processing, colour interpolation and/or YUV converting on the raw image input from the camera unit 110 and, in this case, the image can be a full-resolution image of the camera unit 110. The still image decoder 340 processes the image output by the image processing part 320 to generate a compressed image. At this time, the compressed image can be a JPEG image or an image coded in a size reduction coding format known in the art and different from JPEG. In the alternative exemplary embodiment of the present invention, the compressed images are coded in the JPEG format. The scaler 330 generates a viewing image by scaling the image output from the image processing part 320 to fit a predetermined size for display on the display unit 160. At this time, the image scaling can be done with at least one of cropping, resizing, and the like to generate the viewing image. Here, the viewing image can be the image to be displayed on the display unit 160 and/or the image to be stored when capturing a moving image. At this time, the scaler 330 of the ISP 130 may change the data size of the viewing image for use in the preview mode or in storing a moving image. As described above, in the case that the image processing part 320 does not perform a colour conversion function, the scaler 330 can be configured as a viewing image generator. In this case, the viewing image generator can be configured to have a scaling function and a colour conversion function for converting a raw image to a YUV image.

When generating the viewing and compressed images at every frame period, the ISP 130 also generates shooting information with various sensor information acquired while the camera apparatus takes the images. Typically, the camera apparatus has information for setting the camera unit 110 but not the information provided by the camera unit 110. When storing the output image of the camera unit 110, exif data is generated; however, the exif data is limited in amount for storing the shooting information and can be referenced only from the captured image. According to the alternative exemplary embodiment of the present invention, if the camera unit 110 is driven, the image processing controller 310 generates the shooting information of the frame image with the input from the camera unit 110 and the sensor unit 120 of the apparatus. The AP 140 buffers the acquired shooting information along with images of the corresponding frame as embedded data (metadata) so as to use the functions of the camera apparatus efficiently using the buffered information.

In the alternative exemplary embodiment of the present invention, the ISP 130, which receives the images from the camera unit 110 at every frame, generates viewing YUV images and compressed images and shooting information of the corresponding frame image (image data plus embedded data). Here, examples of the shooting information (metadata) include the data listed in Table 1.

**TABLE 1**

| Meta Data | Size | Remark |
|---|---|---|
| Flash | 4 byte | Use when flagged, flash capable of checking full flashlight amount to operate. |
| ISO | 4 byte | Store ISO information |
| EV | 4 byte | Store Exposure Value |
| Data type | 4 byte | Store data type of JPEG, YUV, and meta data |
| Data size | 4 byte | Use for storing size of variable JPEG and buffering JPEG image |
| Face detection | 4 byte | Store FACE detection function on/off |
| Face num | 4 byte | Store number of recognized faces |
| FD start x | 4 byte | Store start x value of face-recognized rectangular coordinates. Store as many as number of recognized faces like FD[0].sx, FD[1].sx |
| FD start y | 4 byte | Store start y value of face-recognized rectangular coordinates. Store as many as number of recognized faces like FD[0].sy, FD[1].sy |
| FD end x | 4 byte | Store right bottom x value of face-recognized rectangular coordinates. Store as many as number of recognized faces like FD[0].ex, FD[1].ex |
| FD end y | 4 byte | Store start x value of face-recognized rectangular coordinates. Store as many as number of recognized faces like FD[0].ey, FD[1].ey |
| Effect | 4 byte | Store configured effect value |
| White balance | 4 byte | Store configured WB value |
| Scene mode | 4 byte | Store configured Scene mode value |
| Metering | 4 byte | Store configured sidelight mode value |
| I-frame | 4 byte | Store iframe information value in use of MPEG |
| P-frame | 4 byte | Store pframe information value in use of MPEG |
| Sharpness | 4 byte | Store configured sharpness value |
| Saturation | 4 byte | Store configured saturation value |
| Contrast | 4 byte | Store configured contrast value |
| Frame count | 4 byte | Store count value of current input frame |
| HDR | 4 byte | Store HDR operation state |
| Zoom | 4 byte | Store configured zoom magnification |
| AF | 4 byte | Store AF status |
| CAF x | 4 byte | Store x coordinate value in CAF operation |
| CAF y | 4 byte | Store x coordinate value in CAF operation |
| Gyro data | 4 byte | Store Gyro data value, use in shaking detection |
| Anti-shake | 4 byte | Store anti-shake function presence/absence |
| Quality | 4 byte | Store configured JPEG quality value |
| Storage | 4 byte | Store media data storage location |
| Shoot date | 4 byte | Store current time information |
| GPS Info. | 4 byte | Store GPS status |
| Location Info. | 4 byte | Store current location data value |
| Altitude Info. | 4 byte | Store current altitude information |
| Camera angle info. | 4 byte | Store current camera angle information |
| Acceleration sensor | 4 byte | Store acceleration sensor data value, use in shake detection |

Using the above described shooting information (metadata), the user is capable of configuring various functions. That is, the user is capable of finding the setting value appropriate for the situation using frequently pictured object information and camera menu information. For example, when a human face is detected in the preview mode, the camera apparatus is capable of configuring a menu frequently used when taking a picture of the corresponding person and promising satisfactory output by referencing a portrait database (DB) based on the shooting information automatically. A user of the camera apparatus who frequently takes pictures of family, friends, and lovers is able to search the portrait DB for information useful to take a picture of such a person, or, if no useful information is available, to set the menus to help to take that picture (e.g. a smile shot, a beauty shot, a portrait scene mode, an AF mode, object tracking, ISO, an effect, white balance, exposure, metering, zooming, flash, etc.). Also, if no information on the person is provided in preview mode, the camera apparatus is able to set the configuration appropriate for the landscape picture by checking the part related to the landscape picture (e.g. outdoor visible, flash, ISO, effect, white balance, exposure, metering, landscape scene mode, Fan focus mode, etc.) Images taken as described above can be stored on the basis of the user's camera utilization pattern (e.g. taking and storing a lover's photo in a lover album or posted to a designated SNS or uploaded to an electronic cloud storage system). The camera apparatus is also able to display images taken continuously along with similarity information such that the user can check the similarity with albums or post-view images.

The multiplexer 350 of the ISP 130 multiplexes the viewing image, the compressed image, and the shooting information, and outputs the multiplexing result to the AP 140 under the control of the image processing controller 310.

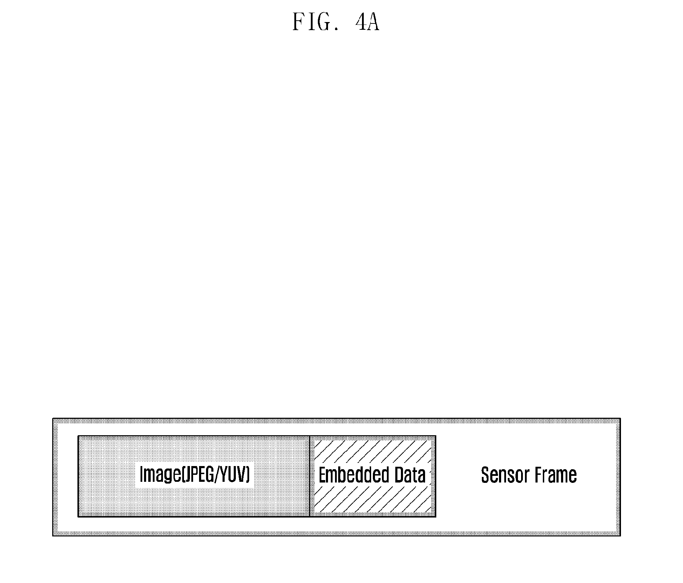

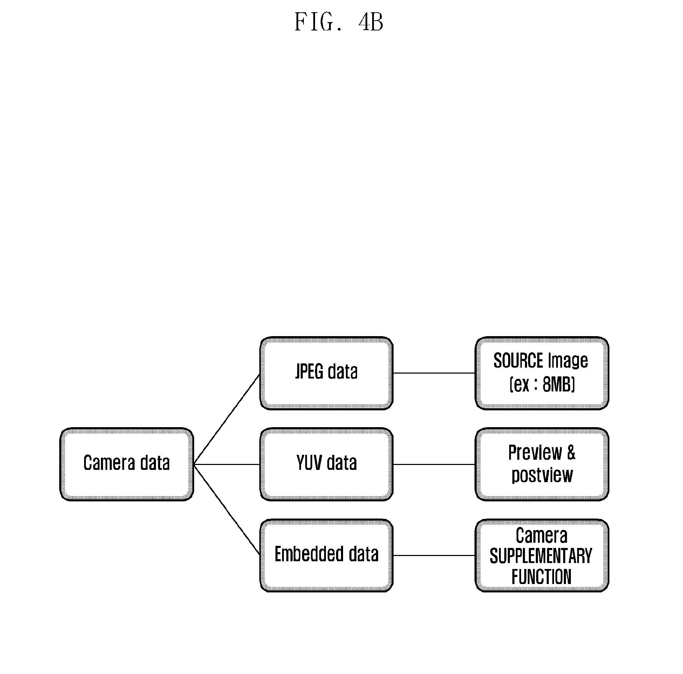

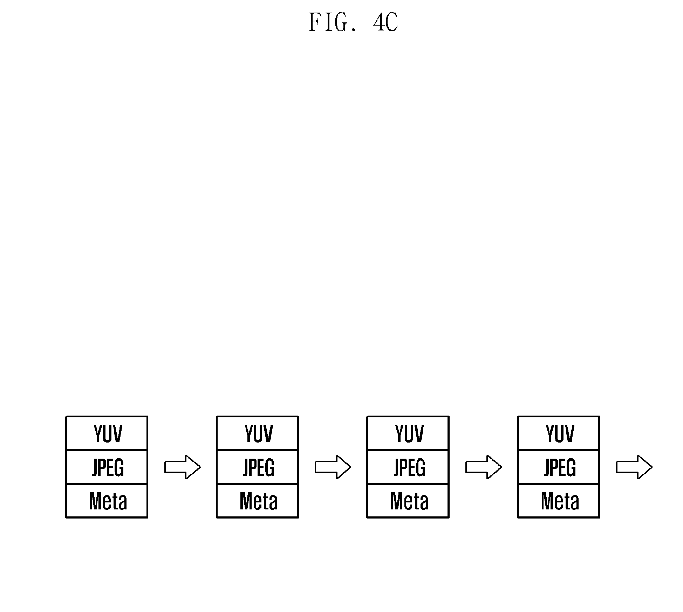

FIG. 4A is a diagram illustrating the structure of the image frame generated by the ISP according to the exemplary embodiment of the present invention, FIG. 4B is a diagram illustrating the format of the frame consisting of YUV image, JPEG image, and shooting information according to the exemplary embodiment of the present invention, and FIG. 4C is a diagram illustrating the data transfer format of every frame according to the exemplary embodiment of the present invention.

Referring to FIGS. 4A to 4C, the ISP 130 generates YUV images, JPEG images, and shooting information (embedded data or meta data) at every frame period; and the multiplexer 350 multiplexes the YUV and JPEG images and shooting information as shown in FIG. 4A and transfers the multiplexing result to the AP 140 as a sensor frame.

As shown in FIG. 4B, the JPEG data as the compressed image is the source image and data to be stored as a still image in response to a capture request. At this time, the size of the JPEG data can be determined by the image sensor 220 of the camera unit 110 to be equal to or greater than, for example, 8M bytes. The YUV data is the image to be displayed on the display unit 160, scaled to fit the display unit 160. The YUV data is also capable of being used as post view data as well as preview data. That is, the viewing images stored in the viewing image buffer 383 can be displayed on the display unit 160 as a post view in response to the capture request. The shooting information is the camera's supplementary function information and includes information generated while the camera unit 110 takes images and information acquired by the sensor unit 120. At this time, the shooting information can be stored by being included in the compressed image or stored separately from the compressed image. In the exemplary embodiment of the present invention, the shooting information is stored separately from the compressed image. The ISP 130 is capable of using the information acquired by the camera unit 110 and the sensor unit 120 to generate the shooting information formatted as shown in Table 1, and the shooting information is stored in association with the viewing and compressed images in a single frame. Afterward, the user is capable of storing and processing the images efficiently using the shooting information.

According to the exemplary embodiment of the present invention, the camera frame data structured as shown in FIG. 4B is generated by the ISP 130 and transmitted to the AP 140 in the transfer format as shown in FIG. 4C. For example, the YUV data may have a size up to 2MB (Full HD: 1920*1080*2, YUV422 format is 2Byte per pixel), and the JPEG data may have a size up to 8MB, while the meta data as shooting information may have a size up to 4KB. in this case, the bus bandwidth necessary for the ISP 130 to transmit each frame data becomes (1920*1080*2 + 8*1024*1024 + 4*1024) * 30 fps * 8bit = 3,009,576,960 bps = 2.87 Gbps.

The demultiplexer 355 of the AP 140 demultiplexes the viewing image, compressed images, and shooting information multiplexed by the ISP 130, and the parser 370 parses the viewing and compressed images and shooting information, with the viewing and compressed images and shooting information being buffered in the respective viewing image buffer 383, compressed image buffer 385, and shooting information buffer 387. The buffer 380 is implemented in the form of a ring buffer such that data corresponding to a predetermined number of frames is overwritten in the buffer.

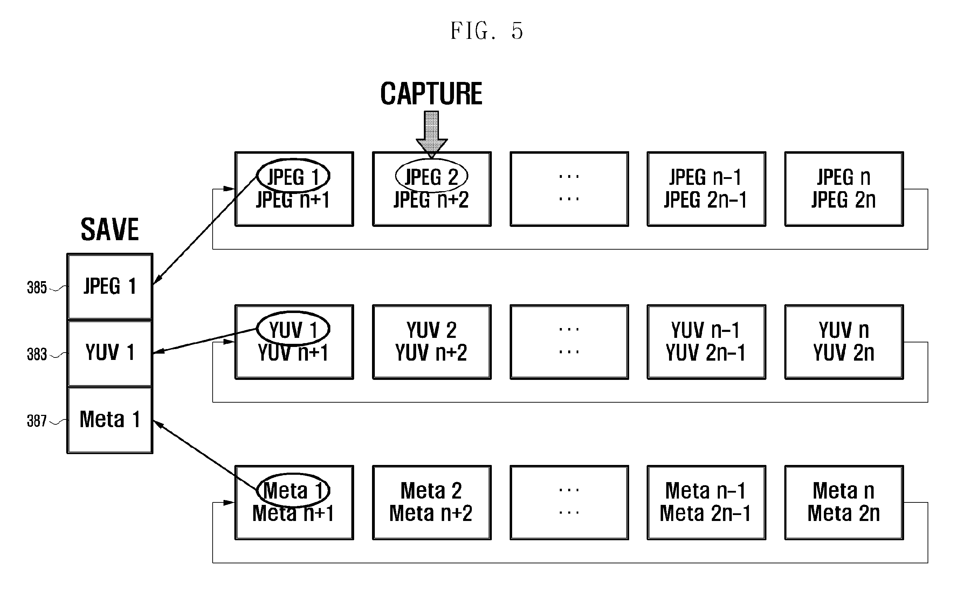

FIG. 5 is a diagram illustrating the configurations of the viewing and compressed images and shooting information buffers according to the exemplary embodiment of the present invention. Referring to FIG. 5, each of the buffers 383, 385, and 387 is configured as an N ring buffer capable of storing the data corresponding to N frames and to buffer the corresponding data under the control of the application processing controller 360. If an N ring buffer is filled with data of a given type, such as viewing images, compressed images, or storing information, the application processing controller 360 overwrites the data from the bottom of a respective type of buffer. For example, the compressed image buffer 385 has a structure of a ring buffer capable of storing JPEG images of N frames in the order of generation from JPEG 1 to JPEG n images. The compressed image buffer 385 is overwritten by the JPEG n+1 to JPEG 2n images. The frames of the viewing image buffer 383, compressed image buffer 385, and shooting information buffer 387 are synchronized by a frame count value. Accordingly, the application processing controller 360 is capable of processing the viewing and compressed images and shooting information of the same frames based on the frame count value.

The application processing controller 360 controls such that the viewing image is displayed on the display unit 160 as a preview image while buffering the viewing image in the viewing image buffer 383. If a user's capture request command is input in this state, the application processing controller 360 detects the capture command and stores the compressed image of a predetermined frame among the compressed images buffered in the compressed image buffer 385. Here, the predetermined frame can be the frame having zero shutter lag. The compressed images can be the JPEG images and, in this case, the compressed image to be stored may include a JPEG header, a thumbnail image, and a JPEG image.

In the alternative exemplary embodiment of the present invention, when the capture request is detected, it is possible to realize the zero shutter lag using the buffered compressed images and to store the compressed image selected by the user among the buffered frame image or selected based on the shooting information. In this case, the user is capable of configuring the zero shutter lag and the image and shooting information checking functions in advance or at the time when the capture is triggered. In the following description of exemplary embodiments of the present invention, such functions are configured in advance.

First, in the case that the zero shutter lag function is configured, when the capture request command is input, the application processing controller 360 detects the command input through the input unit 170 and selects the compressed images generated in the previous frame among the images buffered in the compressed image buffer 385 and stores the selected image in the storage unit 150. For example, if the shutter delay (shutter lag) is set to one frame, the application processing controller 360 stores the compressed data of the previous frame that are buffered using the buffers as shown in FIG. 5 upon detection of the capture request command. For example, if the capture command occurs at the time point of JPEG2 of FIG. 5, the application processing controller 360 stores the JPEG1 image buffered in the compressed image buffer 385 and metadata1 or meta1 in the storage unit 150. At this time, the YUV1 and meta1 having the same frame count value as the JPEG1 image can be stored along with the JPEG1 image. As described above, the zero shutter lag can be realized by selecting the compressed image corresponding to the frame at the shutter release time point when the capture request has occurred among the compressed images of the previous frames that are buffered in the compressed image buffer 385 and storing the selected image in the storage unit 150.

Second, the description is made of the operation for performing a second function for selecting wanted or desired compressed images while displaying the thumbnail images and viewing images. The picture or image to be captured may not be the one normally selected. For example, the normally selected image might be undesirable due to the camera having been shaken or a person in the image might close his or her eyes. Since a photo is taken at an instance, it may become impossible to secure the same condition for taking an image of the subject again. Accordingly, if it is difficult to retake the image of the subject in the same conditions, it is preferred to capture one of compressed images being buffered. The method according to the exemplary embodiment of the present invention is capable of selecting a photo image among the images buffered in the compressed image buffer 385. For this purpose, the method according to the exemplary embodiment of the present invention generates a thumbnail image when the viewing images are generated. When the capture request is detected, the application processing controller 360 displays the thumbnail images of the compressed images buffered in the compressed image buffer 385 and stores the compressed image corresponding to the thumbnail image selected by the user. Also, when the capture request is detected, the application processing controller 360 can control to display the viewing images buffered in the viewing image buffer 383 such that the user selects a target compressed image.

The aforementioned second function is capable of being configured along with the zero shutter lag function. In this case, the application processing controller 360 selects the compressed images while the zero shutter lag function is running and, if the compressed image is not the intended image, checks the thumbnail images or viewing images to select another compressed image.

Third, if image capture is requested when a third function for selecting the capture image using specific shooting information is operational, the AP 140 checks the shooting information to select a compressed image. For example, if the images are taken with a flash, the application processing controller 360 checks the flash information of the shooting information to select the compressed image at the time where the flash was emitted most brightly; and if the shake detection function is configured by the user, the application processing controller 360 checks the information of the shake sensor (e.g. a gyro sensor, an acceleration sensor, etc.) to select a compressed image taken without shaking. Also, the application processing controller 360 can control buffering of images in the buffer 380 by checking the data size of the shooting information.

FIGS. 1 and 3 are block diagrams illustrating the configurations of the camera apparatus according to the exemplary embodiment of the present invention. Here, the ISP 130 processes the image output from the camera unit 110, controls the operation of the camera unit 110, and performs a function for acquiring the shooting information of the camera unit 110. The sensor unit 120 is connected to the ISP 130 to generate shooting information along with the information acquired from the camera unit 110 when the camera is operating. The AP 140 controls the operations of the ISP 130 and processes the data (viewing and compressed images and shooting information) output by the ISP 130.

However, the AP 140 can perform or operate with other applications in addition to the application (i.e. a camera-related application) of the ISP 130. Such applications can include the application of the sensor unit 120. For example, the sensor unit 120 can include a GPS module to receive GPS signals and to display the location of the apparatus. For example, the apparatus may include the camera apparatus or terminal device including the camera apparatus. The sensor unit 120 may also include a movement sensor to indicate a movement state of the apparatus. For example, the movement sensor is capable of sensing any horizontal and/or vertical movement of the apparatus, and the gyro sensor is capable of detecting axial movement along any of the x, y, and z axes. Accordingly, the application senses the output of the movement sensor and indicates the posture, orientation, and/or movement of the apparatus based the output of the movement sensor. In this case, the sensor unit 120 may be connected to the AP 140.

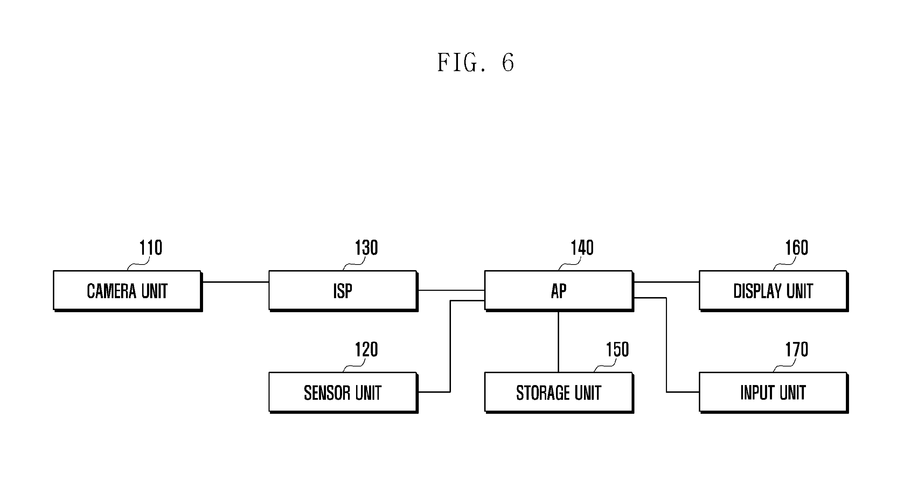

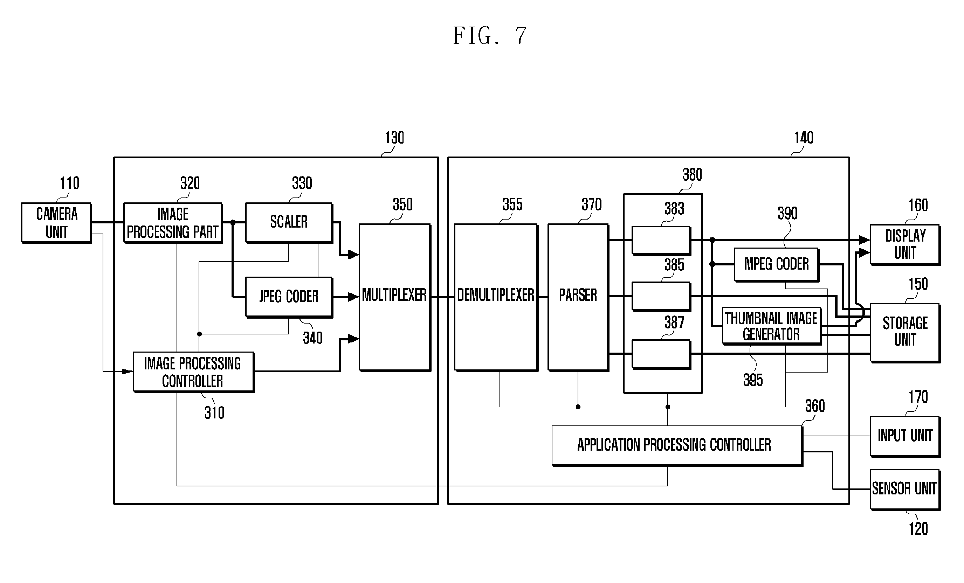

FIG. 6 is a block diagram illustrating the configuration of a camera apparatus or a terminal apparatus including a camera apparatus in which the AP 140 processes the output of the sensor unit 120 according to another alternative exemplary embodiment of the present invention, and FIG. 7 is a block diagram illustrating the configuration of the ISP 130 and AP 140 of the apparatus of FIG. 6. In the following, the description is directed to the shooting information generation and processing operations when the camera is operating. Other operations, with the exception of the shooting information generation and processing operations, are identical with those described with reference to FIGS. 1 and 3.

Referring to FIGS. 6 and 7, if the user inputs the camera drive command by using the input unit 170, for example, if the preview mode is executed, the application processing controller 360 notifies the ISP 130 of the camera drive command detection, and the image processing controller 310 drives the camera unit 110. The images output by the camera unit 110 are input to the image processing part 320.

At this time, the ISP 130 generates the viewing and compressed images and shooting information. The image processing part 320 is capable of performing various functions and methods, such as 3A processing, colour interpolation and/or YUV converting on the raw image input from the camera unit 110 and, in this case, the image can be a full-resolution image of the camera unit 110. The JPEG coder 340 performs compression coding on the image output by the image processing part 320 in JPEG format to generate the compressed image to be stored in response to the capture request, and the scaler 330 performs size-reduction on the image output by the image processing part 320 to generate the viewing image to be displayed on the display unit 160 in a preview mode. As described above, if the image processing part 320 is not responsible for colour conversion function, the scaler 330 can be configured as a viewing image generator. In this case, the viewing image generator can be configured with the colour conversion (conversion from raw image to YUV image) and scaler functions.

The ISP 130 also generates the shooting information acquired at the time when the camera unit 110 takes the images while ISP 130 generates the viewing and compressed images at every frame period. In this case, the image processing controller 310 of the ISP 130 generates the shooting information with operation configuration information (setting information) of the camera unit 110 and the information acquired from the camera unit 110 when the camera operates. That is, in the apparatus configured as shown in FIGS. 6 and 7, the ISP 130 controls the camera unit 110 and generates the shooting information using only the information acquired from the camera unit 110 (hereinafter, referred to as first shooting information).

The ISP 130 also generates the YUV images, the JPEG images, and the first shooting information at every frame period, and the multiplexer 350 multiplexes the YUV and JPEG images and shooting information as shown in FIG. 4A and transfers the multiplexing result to the AP 140.

Here, the camera apparatus and the terminal apparatus equipped with the camera apparatus can be a portable terminal carried by the user. The apparatus is mobile such that its location changes according to the area or region where the user travels or roams, its mobility changes according to how the user moves (by car, airplane, or train, or on foot), its altitude changes according to the user's vertical location (rooftop or basement of building, mountain top, or sea), its posture changes according to the user's behaviour (movement in vertical or horizontal directions, or in any of the x, y, or z axial directions), and its orientation changes (east, west, south, and north, or combinations thereof). The camera apparatus or the terminal apparatus equipped with the camera apparatus may include the sensor unit 120 for detecting the aforementioned properties of location and movement, and the sensor unit 120 may include various sensors. The sensor unit 120 may include a GPS receiver for detecting the location, area, and mobility of the terminal, a movement sensor (an acceleration sensor, a gyro sensor, etc.) for detecting the movement of the apparatus, an altitude sensor for measuring the altitude of the apparatus, an orientation sensor for detecting the orientation of the apparatus, a illumination sensor for sensing the ambient brightness about the apparatus, etc. The camera apparatus or the terminal apparatus equipped with the camera apparatus is also capable of receiving weather and temperature information and other supplementary information through the Internet or other known communication methods and/or networks when the camera is operating. For this purpose, the camera apparatus or the terminal apparatus equipped with the camera apparatus may include a communication unit, e.g. Wi-Fi module, to connect to the communication network or the Internet. The information acquired by the sensor unit 120 and/or the communication unit, when the camera is running, is referred to as second shooting information.

The viewing and compressed images and the first shooting information transmitted by the ISP 130 as multiplexed data or images are demultiplexed by the demultiplexer 355 of the AP 140 and parsed into the viewing images, compressed images, and shooting information by the parser 370, and buffered in the viewing image buffer 383, the compressed image buffer 385, and the shooting information buffer 387, respectively. At this time, the application processing controller 360 of the AP 140 generates the second shooting information with the output of the sensor unit 120 and/or supplementary information received through a communication unit, and merges the parsed first shooting information with the second shooting information while buffering the merged shooting information. That is, the AP 140 merges the second shooting information generated by the AP with the first shooting information transmitted by the ISP 130 at every frame such that the merged shooting information is buffered in the shooting information buffer 387. In an example embodiment, the buffer 380 is configured in the form of a ring buffer as shown in FIG. 5 and, if the data corresponding to a predetermined number of frames is buffered, the data is overwritten. The frames of the viewing image buffer 383, the compressed image buffer 385, and the shooting information buffer 387 are synchronized among each other using a frame count value. Accordingly, the application processing controller 360 checks the frame count value to process the viewing image, the compressed images, and the shooting information per frame.

The application processing controller 360 also controls such that the viewing image is buffered in the viewing image buffer 383 while being displayed on the display unit 160 as a preview image. If a user's capture request command is input in the above state, the application processing controller 360 detects the inputted command and stores the compressed image selected according to the configuration among the compressed images buffered in the compressed image buffer 385. In the case that the zero shutter lag function is configured, the AP 140 selects the compressed image of the frame at the time when the capture command is detected (i.e. when the user has checked on the display unit 160 or view finder) and stores the selected image. In the case that the user has configured a specific function to take or capture images (e.g. with functions for a flash, face recognition, anti-shaking, etc.), the AP 140 analyses the shooting information related to the corresponding function and stores the compressed image of the frame which is selected as the optimal image based on the analysis result. In the case that a manual setting is configured by the user, the AP 140 displays the thumbnail images and/or shooting information to store the compressed image of the frame selected by the user. At this time, the compressed image to be stored can be a JPEG image and, in this case, the compressed image can be composed of a JPEG header, a thumbnail image, and a JPEG image.

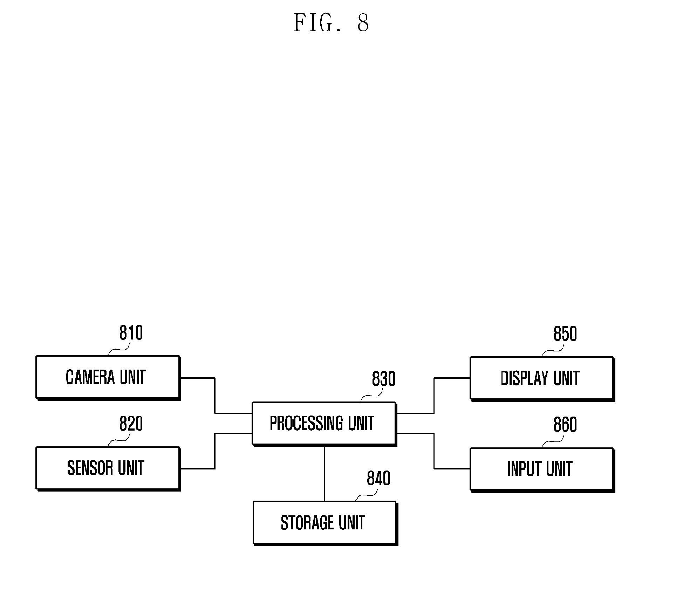

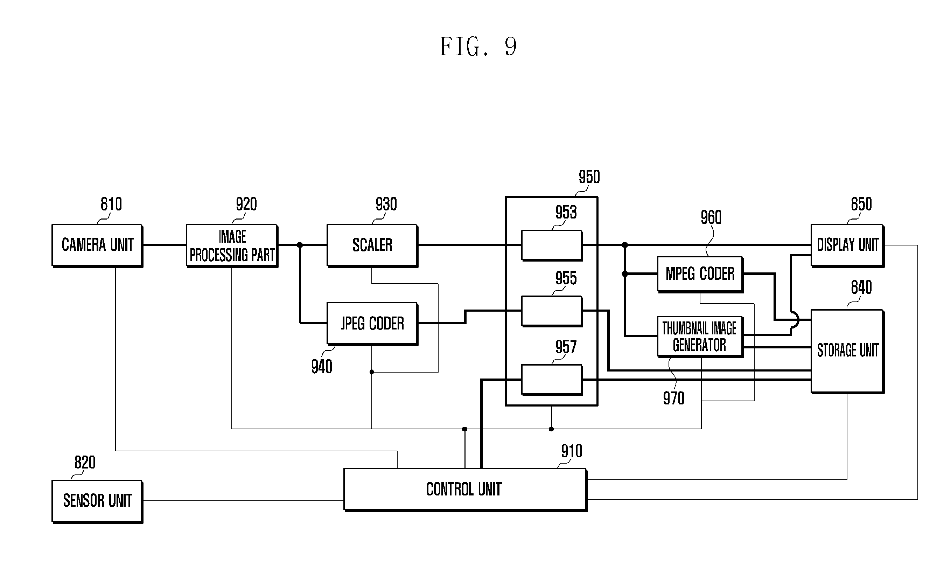

The camera apparatus configured as shown in FIGS. 1, 3, 6, and 7 is directed to the case where the ISP 130 and the AP 140 process the images taken by the camera unit 110. However, the ISP 130 and AP 140 can be integrated into a single processor. FIG. 8 is a block diagram illustrating a configuration of the camera apparatus for processing the image and performing an application with a single processing block according to another alternative exemplary embodiment of the present invention, and FIG. 9 is a block diagram illustrating the configuration of the processing block of FIG. 8.

Referring to FIGS. 8 and 9, the camera unit 810 takes external images when the camera is running, and the sensor unit 820 may include at least one of a GPS receiver, a gyro sensor, an acceleration sensor, an altitude sensor, and an orientation sensor, as aforementioned.

The processing unit 830 processes the image acquired from the camera unit 810 to generate a viewing image to be displayed on the display unit 160, a compressed image to be stored in response to the capture request, and shooting information and buffers the images and shooting information. Here, the processing unit 830 is configured to perform the functions of the ISP and application processing unit integrally. The processing unit 830 generates the viewing images, the compressed images, and the shooting information at every frame period and buffers the images and the shooting information in the same frame.

The input unit 860 may generate a camera drive command and a capture command and supply the commands to the processing unit 830. The input unit 860 is capable of generating a command requesting display of the shooting information and/or thumbnail images in response to a user input for image capture. The display unit 850 displays the viewing image output by the processing unit in a preview mode. The display unit 850 is also capable of displaying the shooting information and/or thumbnail images output by the processing unit 830 when capturing the image. Here, the input unit 860 can be a touch panel detecting a touch input of the user, and the display unit 850 can be an LCD or OLED panel for displaying data and images generated by the execution of a program. Here, the input unit 860 and the display unit 850 can be integrated into a touchscreen. The input unit 860 may include buttons arranged on or extending from an exterior of the camera apparatus.

The storage unit 840 stores the compressed images being buffered by the processing unit 830 in response to the capture request.

In FIG. 9, the processing unit 830 is depicted without the ISP multiplexing the frame images and shooting information and transferring the multiplexing result to the AP and multiplexing the frame images and information received from the application processing unit, and parsing the frame images and information, as in the other embodiments of the present invention. Other configurations and operations thereof described herein in connection with FIG. 8 and 9, for example, using a scaler 930, a JPEG coder 940, a viewing image buffer 953, a compressed image buffer 955, a shooting information buffer 957, an MPEG coder 960, and a thumbnail image generator 970 are identical with those configurations and operations and comparable and/or identical components described with reference to FIGS. 3 and 7.

That is, the full-HD or higher resolution image processed by the image processing part 920 is compression-coded into a JPEG image and adjusted in size by the scaler 930 into a viewing image. The control unit 910 generates the shooting information with the information acquired from the camera unit 810 and the sensor unit 820 when taking images. At this time, the JPEG image, the viewing image, and the shooting information are generated at every frame period; and the JPEG image, the viewing image, and the shooting information have the same frame count value. Accordingly, the JPEG image, the viewing image, and the shooting information generated at the same frame are processed in synchronization. The JPEG image, the viewing image, and the shooting information are buffered in the corresponding buffers 955, 953, and 957, respectively, of the buffer 950 under the control of the control unit 910, and the viewing image is displayed on the display unit 850 as a preview image.

If a capture request is input, the control unit 910 selects the compressed image of the previous frame set in the compressed image buffer 955 and stores the selected image in the storage unit 840 so as to realize the zero shutter lag. As described above, the control unit 910 is capable of displaying the thumbnail images or viewing images as post view images such that the user store a compressed image selectively. The control unit 910 is capable of displaying the shooting information being buffered according to the user configuration such that the user stores the compressed image by selectively checking the shooting information and inputting selections.

As described above, a camera apparatus according to exemplary embodiment of the present invention is capable of generating viewing images for preview and compressed images for storage at every frame or generating and buffering the preview and compressed images and shooting information, while the camera is running. Accordingly, the camera apparatus is capable of realizing a zero shutter lag with the images being buffered in response to the capture (save) request and storing any of the images taken around the shooting time as the user's target image selectively.

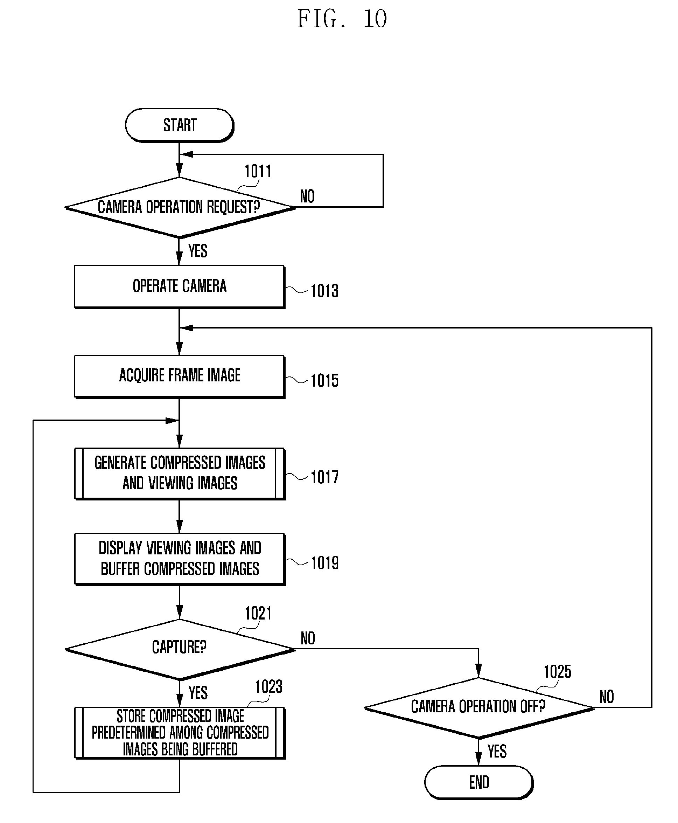

FIG. 10 is a flowchart illustrating a procedure for processing viewing and compressed images at every frame in a camera apparatus according to an exemplary embodiment of the present invention.

Referring to FIG. 10, if a camera operation request is input through the input unit 170, the AP 140 detects the request at step 1011 and notifies the ISP 130 of the request detection and thus the ISP 130 drives the camera unit 110 to operate the camera at step 1013. Otherwise, in step 1011, if no camera operation request is input, the method loops back repeatedly until such a request is detected. In step 1013, the ISP 130 drives the camera according to the configuration information (e.g. focus, zoom, white balance, etc.).

If the camera is driven in step 1013, the ISP 130 acquires the full-HD or higher resolution images taken by the camera unit 100 for a single frame at step 1015 and generates the viewing and compressed images for the corresponding frame at step 1017. At this time, the frame rate can be 30 fps or higher (e.g. 60 fps). Accordingly, the ISP 130 generates the viewing and compressed images of 30 frames per second. The viewing and compressed images are multiplexed and transferred to the AP 140 which buffers the viewing and compressed images at step 1019 while displaying the viewing image on the display unit 160 as a preview image.

If the user inputs a capture request command when the camera apparatus is operating in the preview mode, the AP 140 detects the command at step 1021 and stores the compressed images selected among the compressed images being buffered according to the configuration in the storage unit 150 at step 1023. Otherwise, in step 1021, if no capture request command is received, the method proceeds to step 1025. Referring to step 1023, the compressed image selection can be configured in various ways. In the case that a zero shutter lag function is configured, the AP 140 stores the compressed image of the previous frame, which is selected among the compressed images being buffered, in the storage unit 150. For example, if the shutter delay (shutter lag) is set to one frame and if a capture request command is input, the zero shutter lag is realized by storing the compressed data of the previous frame buffered as shown in FIG. 5. A function for selecting the target compressed images while displaying the thumbnail images or viewing images can be configured. Referring back to step 1025, if a camera operation termination command is input by the user, the AP 140 detects this command input at step 1025 and turns the camera unit 110 off by using the ISP 130, and then the method in FIG. 10 ends. However, if no camera operation termination command is input, the method loops back to step 1015 to perform steps 1015-1025 until a camera operation termination command is inputted and detected in step 1025.

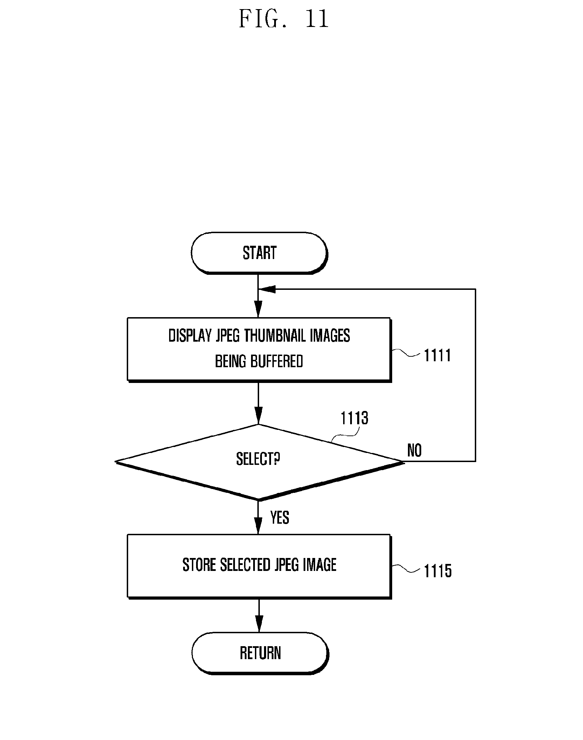

FIG. 11 is a flowchart illustrating the procedure for storing the compressed image selected by the user while displaying the thumbnail images in capturing images of step 1023 in FIG. 10.

Referring to FIG. 11, the normally selected image may not satisfactory. For example, the images taken with a shaking camera or having the person moving or closed his or her eyes at the shooting time are likely to be discarded. However, it is difficult to retake the scene in the same conditions. To overcome this problem, the method according to the exemplary embodiment of the present invention is capable of storing a target image selected among the compressed images being buffered. In the exemplary embodiment of the present invention, the thumbnail images are generated using the viewing images. If a capture request is detected, the AP 140 displays on the display unit 160 the thumbnail images, for example, in the JPEG format, corresponding to the compressed images being buffered at step 1111. The method then detects for a user selection of a thumbnail image in step 1113. If no selection is detected, the method loops back to step 1111 to continue displaying the thumbnails until a selection is detected. If the user selects a thumbnail image through the input unit 170, the AP 140 detects the selection at step 1113 and proceeds to step 1115, so that the AP 140 stores the compressed image corresponding to the thumbnail image selected by the user in the storage unit 150 at step 1115, and the method returns to complete step 1023 in FIG. 10. If the capture request is detected, the AP 140 displays the viewing images being buffered in sequence (post view) such that the user selects one of the compressed images.

The capture function performed in the procedure as shown in FIG. 11 can be configured along with the zero shutter lag function. In this case, the AP 140 selects the compressed images with the zero shutter lag function and, if the compressed image is not satisfactory, checks the thumbnail images or viewing images to select another compressed image.

While repeating the above described operation, the camera apparatus performs the preview mode and capture operation.

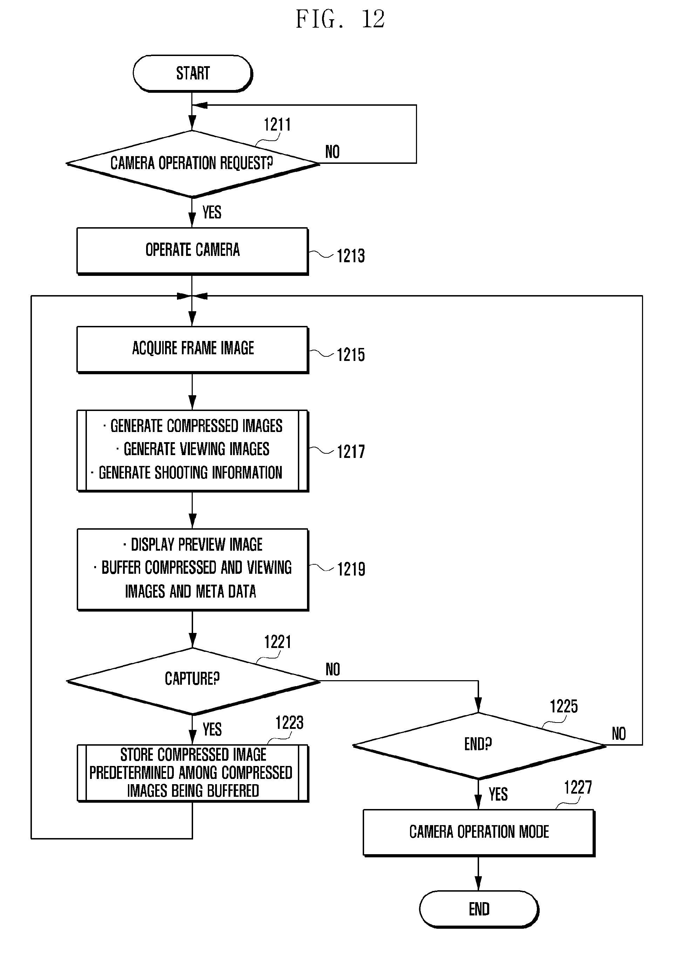

FIG. 12 is a flowchart illustrating the procedure for processing the viewing and compressed images and shooting information at every frame in the camera apparatus according to the alternative exemplary embodiment of the present invention.

Referring to FIG. 12, if the camera command is input requesting a camera operation, the AP 140 acquires images from the camera unit 110 through steps 1211 to 1215 which are identical with steps 1011 to 1015 of FIG. 10. However, if no camera operation is requested in step 1211, the method loops back repeatedly to perform step 1211 until a camera operation is requested.

Afterward, when step 1215 is performed, the AP 140 generates the viewing and compressed images and shooting information of the corresponding frame at step 1217. At this time, the frame rate can be 30 fps or higher (e.g. 60 fps), and the ISP 130 is capable of generating the viewing and compressed images and shooting information structured as shown in Table 1 that correspond to 30 or more frames per second. The viewing and compressed images and shooting information generated as above are multiplexed and then transferred to the AP 140 such that the AP 140 displays the viewing images on the display unit 160 as preview images while buffering the viewing and compressed images and shooting information at step 1219.

If the user inputs the capture request command in the state that the camera apparatus is operating in the preview mode, the AP 140 detects the command at step 1221 and stores the compressed image selected according to the configuration among the compressed images being buffered in the storage unit 150 at step 1223. At this time, the compressed image selection configuration can be performed in various ways. In the case that the capture request command is input when a zero shutter lag function is configured, the AP 140 selects the compressed image selected among the compressed images generated and buffered in the previous frame and stores the selected image in the storage unit 150. Second, in this case that the function for selecting the target compressed images while displaying the thumbnails images or the viewing images is configured, the AP 140 is capable of performing the procedure of FIG. 11 at step 1223. Third, it is possible to select the compressed images while displaying the shooting information.

Repeating the above operations after step 1223, by looping back to step 1215, the camera apparatus performs the preview mode and capture operation. However, in step 1221, if no capture request command is detected, the method proceeds to step 1225 to detect for a camera operation termination command. If the user inputs a camera operation termination command, the AP 140 detects this command at step 1225 and turns the camera unit 110 off through the ISP 135 at step 1227, and the method ends. However, in step 1225, if no camera operation termination command is detected, the method loops back to step 1215.

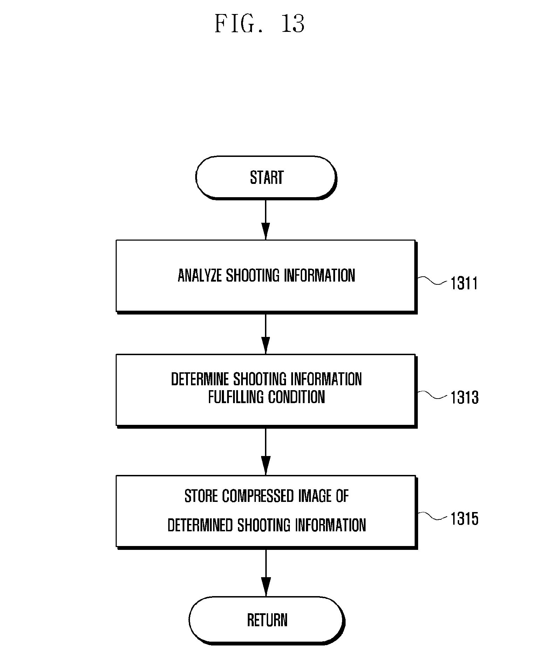

FIG. 13 is a flowchart illustrating the procedure for storing the compressed image selected by the user while displaying the shooting information at the image capture timing in step 1223 of FIG. 12.

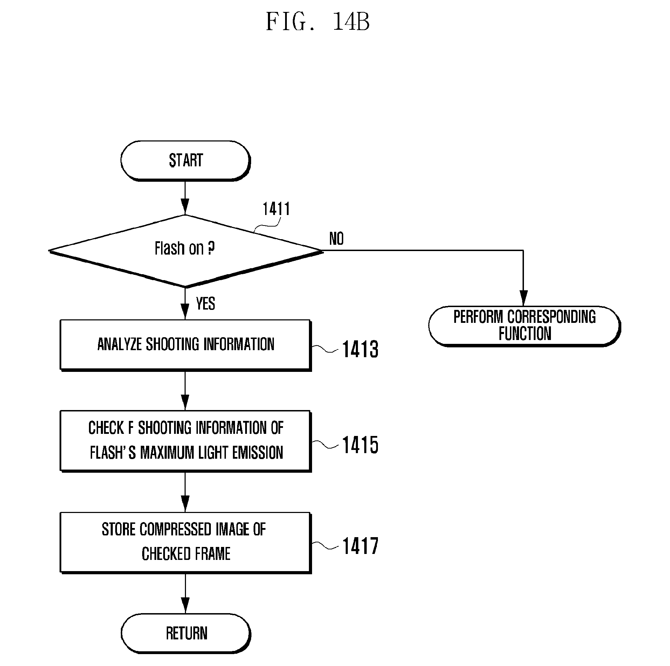

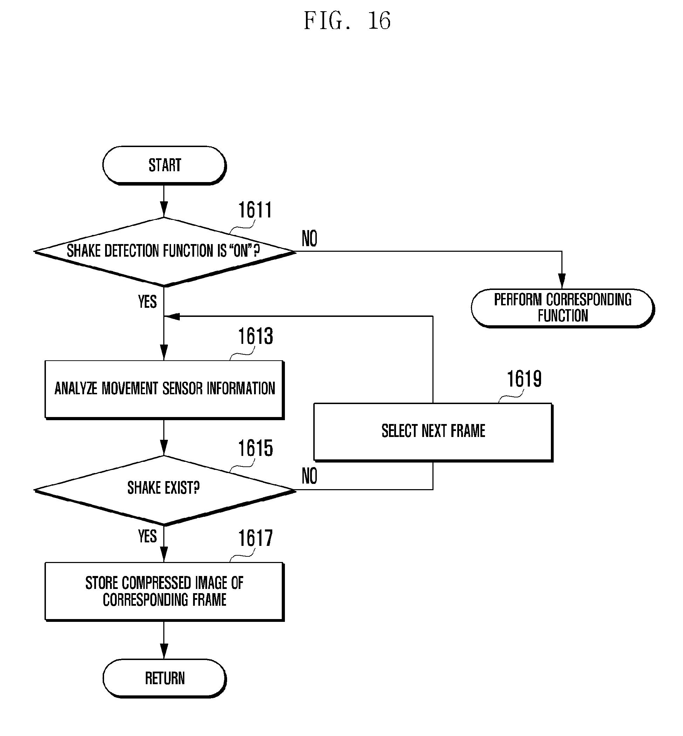

Referring to FIG. 13, the AP 140 is capable of configuring a function for automatically selecting the best image based on the shooting information and a function for manually checking the shooting information to select the best image. First, in the case that the function for selecting images based on specific information, the AP 140 analyses the shooting information related to the configured function upon detection of the capture command and selects the compressed images of the frame taken in the optimal conditions of the configured function based on the analysis result and stores the selected images. This procedure is described later with reference to FIGS. 14B and 16.

In the case that the manual function is configured, the AP 140 is capable of displaying the shooting information being buffered such that the user selects the compressed images. For example, if the image is taken with the flash, the AP 140 is capable of checking the flash information of the shooting information and controlling such that the compressed image taken with the brightest flash light is selected, and checking the information on the sensor unit 120 (e.g. a gyro sensor, an acceleration sensor, etc.) such that the compressed image taken without shaking is selected. For this purpose, the AP 140 analyses the shooting information (metadata) at step 1311 and displays the shooting information items determined to fulfil predetermined conditions and configured to be provided among the shooting information being buffered at step 1313. For example, the AP 140 is capable of displaying the flash information among the shooting information acquired in taking images with the flash on the display unit 160. At this time, the flash information is set to check the flash information of the shooting information of the frame acquired with the brightest flash light when taking the images. Accordingly, the user can check the frame taken with the brightest flash light. At this time, if the user selects the corresponding frame, the AP 140 selects the compressed image corresponding to the selected frame among the compressed images being buffered and stores the selected image in the storage unit 150 in step 1315.

The capture functions being performed in the procedure of FIG. 13 can be configured along with the zero shutter lag function. In this case, the AP 140 selects the compressed image while performing the zero shutter lag function and, if the compressed image is not satisfactory, the user can select another compressed image while checking the displayed shooting information.

As described above, the camera apparatus according to the exemplary embodiment of the present invention generates the viewing and compressed images for storage and shooting information of a corresponding frame from the images taken by the camera unit 110 at every frame, with the data and information being buffered. Using the buffered images, it is possible to realize zero shutter lag and selects the compressed data of intended image. As described above, the values in the shooting information (embedded data) stored at every frame are analysed and applied to the camera function so as to secure the solution optimized for a certain situation.

An example method of improving the function of the camera apparatus using the shooting information is described hereinafter.

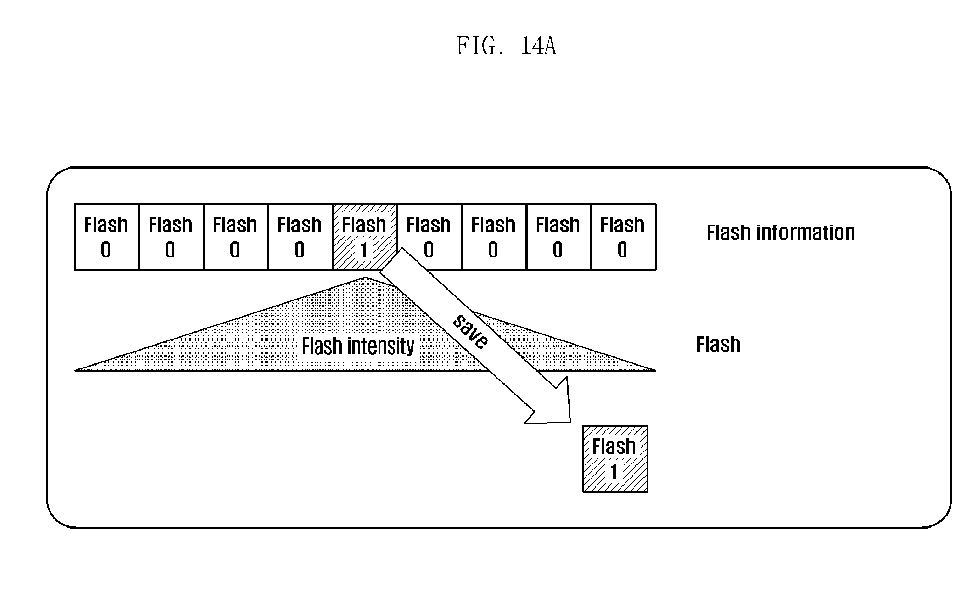

First, the flash timing can be improved using the flash data. FIGS. 14A and 14B are drawings illustrating the method for improving the flash timing with the flash information of the shooting information according to an exemplary embodiment of the present invention.

Referring to FIG. 14A, the ISP 130 operates the flash 260 of the camera unit 110 in flash mode. At this time, the flash 260 in FIG. 2 emits light, and the ISP 130 sets the flash parameter of the shooting information (see Table 1) to a specific value in a frame in the full-light emission state. The ISP 130 is capable of checking the full-light emission state of the flash 260 by monitoring an internal register value, and sets the flash information of the shooting information to the value indicating the full-light emission state in the frame when the flash emits the brightest light. FIG. 14A is directed an exemplary case where the flash information of the shooting information is set to 1 for the frame taken in the full-light emission state of the flash.

Referring to FIG. 14B, when the capture request is detected at step 1021 of FIG. 10, the AP 140 is capable of performing the procedure of FIG. 14B at step 1023. In the case that the flash function is configured to be on, the AP 140 detects that the flash function is configured at step 1411 and analyses the flash information of the shooting information at step 1413. Otherwise, in step 1411, if no flash function is on or is configured, the method performs a different corresponding function of the apparatus. Referring back to step 1413, the flash can be configured to emit the brightest light as shown in FIG. 14A. In this case, the AP 140 identifies the frame for which the flash information indicates a full-light emission state of the flash at step 1415 and stores the compressed image corresponding frame at step 1417. The method then ends.

In this case, there can be a little difference from the shutter-on frame. That is, since the flash is driven at the time when the shutter button is pushed, the brightest emission timing of the flash may be a few frames later within the flash intensity century of FIG. 14A after the shutter-on timing. Accordingly, the user may select the compressed image at the shutter-on timing (i.e. the zero shutter lag-realized frame) or at the brightest light emission timing of the flash. In the former case, the AP 140 selects and displays the compressed image acquired with the zero shutter lag effect and, if the user selects the image taken with the brightest light emission of the flash by checking the shooting information afterward, stores the corresponding compressed image. In the latter case, the AP 140 is capable of selecting and storing the frame at the brightest light emission time of the flash.

As described above, when the flash is activated, the AP 140 displays the flash information of the shooting information on the display unit 160 as shown in FIG. 14A and, if the user selects the frame taken with the brightest light emission frame, selects the compressed image of the corresponding frame and stores the selected image in the storage unit 150. Accordingly, when taking images with the assistance of the flash, it is not necessary to check the full-light emission timing but to use the flash information value of the shooting information (embedded data). That is, since the image taken with the full-light emission timing is indicated by the flash information value, there is no need to synchronize the flash timing separately.

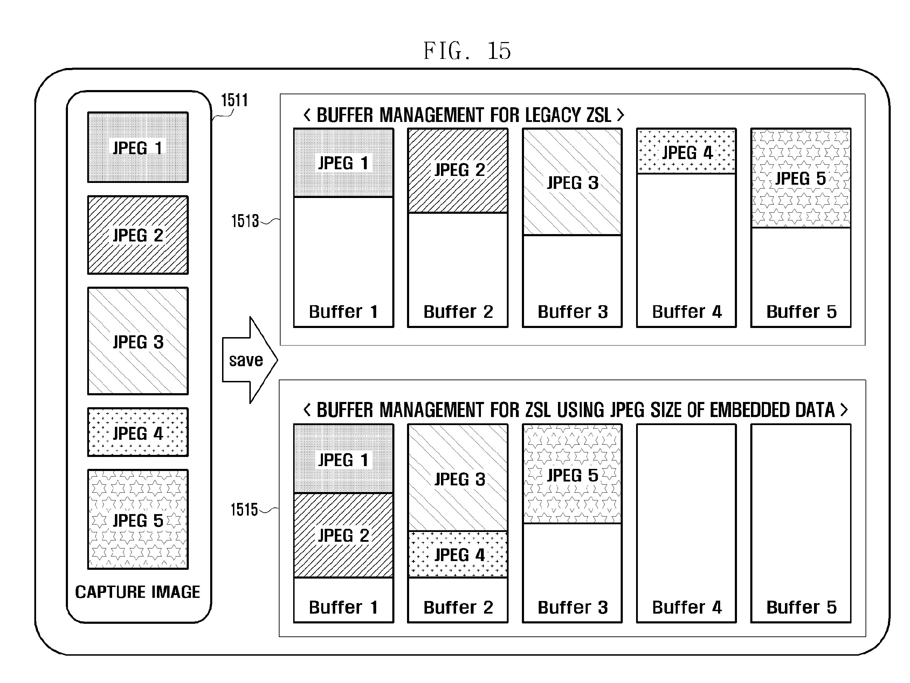

Second, in the zero shutter lag environment, the buffer for buffering the compressed image has a typical JPEG size of the image, such as 8MB. FIG. 15 is a block diagram illustrating the structure of the buffer for buffering the compressed images according to the exemplary embodiment of the present invention.

Referring to FIG 15, in the zero shutter lag environment of the camera apparatus according to the exemplary embodiment of the present invention, a predetermined number of images are buffered in multiple image buffers. At this time, when the size of the JPEG image is 8MB, the compressed image buffer has have a total capacity of 8MB*N buffers. For example, if five buffers, each capable of storing an 8MB image, are used, the compressed image buffer 385 in FIGS. 3 or 7, or the compressed image buffer 955 in FIG. 9, has to be configured to have the size capable of storing five 8MB images. However, the JPEG image generated at every frame has a size varying according to the image taken 1511 and thus there exists wasted, unused portions 1513 of the buffer. Using the data size information (data size and JPEG size) included in the shooting information embedded data having the structure of Table 1, it is possible to store the image in the compressed image buffer 385, 955 to use the memory more efficiently and to the extent of the size of the actually generated JPEG image 1511 and reuse the remaining memory for storing the image of the next frame 1515 shown in FIG. 15. In this case, when five 8M-size buffers are used and the average actual JPEG size of the captured images is 2MB, it is possible to store about 20 images. At this time, the frames can be synchronized with the frame count of the shooting information as structured in Table 1. That is, the JPEG image can be composed of a JPEG header, a thumbnail image, and a JPEG image and, if the JPEG header has a frame count value, the compressed images, the shooting information, and the viewing images 1515 buffered in the compressed image buffer can be synchronized by frame.

Third, it is possible to solve the problem of capturing a shaken image using the shooting information of the sensor unit 120. FIG. 16 is a flowchart illustrating the procedure of capturing images taken without shaking of the camera apparatus using the shooting information according to the exemplary embodiment of the present invention.

Referring to FIG. 16, the gyro sensor and the acceleration sensor of the sensor unit 120 detects the shake of the camera apparatus in general. Accordingly, the camera apparatus generates and buffers the viewing and compressed images and shooting information while performing the procedure of FIG. 12, and the viewing images are displayed on the display unit 160 as preview images. At this time, if the shake-detection function is configured to be on, the AP 140 detects the shaking at step 1611 and analyses the shake sensor information included in the shooting information at step 1613. However, in step 1611, if the shake-detection function is not on, the method performs a different corresponding function. Referring back to step 1613, the shake sensor can be the acceleration sensor and/or the gyro sensor. At this time, the gyro sensor is capable of detecting the axial movement (movement on X, Y, and Z axes) of the camera apparatus. The shooting information generated as shown in Table 1 includes the information generated by the acceleration sensor and gyro sensor of the sensor unit 120.

If the user pushes the image capture button in the above state, the AP 140 checks whether the shake detection function is configured and, if so, selects the shooting information of the zero shutter leg frame, extracts the information of the gyro sensor and acceleration from the selected shooting information, and analyses the extracted two data values at step 1613. At this time, predetermined threshold values for judging the occurs of a shake based on the gyro sensor information and acceleration sensor information are configured such that the AP 140 compares the sensor information of the shooting information with the corresponding predetermined threshold values to determine the presence of shaking at step 1615. At this time, if at least one sensor information of the shooting information of the two sensors is greater than the corresponding threshold values for each sensor, the AP 140 determines that the image is shaken at step 1615 and selects the shooting information of the next frame at step 1619, and the procedure loops back to step 1613. At this time, the frame right before or after the frame indicated by the zero shutter lag configuration can be selected. That is, the frame selection can be performed in such a way that the frame right before the zero shutter lag implementation frame is selected first and then the frame right after the zero shutter lag implementation frame is selected.

However, if it is determined at step 1615 that the frame or image is taken without shaking, i.e. if the acceleration sensor and the gyro sensor information of the shooting information for the corresponding frame satisfy the predetermined threshold values, that is, both the sensor information from the acceleration sensor and the gyro sensor are below their respective sensor threshold values, the AP 140 determines that the image corresponding to the frame or image has been taken without shaking and thus stores the compressed image of the corresponding frame in the storage unit 150 at step 1617. The method then ends.

As described above, when the shake detection function is configured, the AP 140 extracts shooting information related to the acceleration sensor and the gyro sensor as shaking sensor values from the shooting information of the zero shutter lag frame when the capture request is detected and, if at least one of the two sensor values varies abruptly, determines that a shake has occurred. In this case, the AP 140 also extracts the information of the gyro sensor and acceleration sensor from the shooting information of the frame before or after one frame of the frame to be captured and analyses the extracted information. At this time, if the displacement of the two sensor values is less than a respective predetermined threshold value, it is determined that the frame or image has been taken with shaking and stores the compressed image of the corresponding frame being buffered in the storage unit 150. Although the presence of shaking is determined based on both the gyro sensor and acceleration sensor information in the above description, it is possible to determine the presence of the shaking based on one of the gyro sensor information and the acceleration sensor information.

As described above, the camera apparatus generates and buffers the viewing and compressed images and shooting information in the preview mode, with the shooting information including the information from the sensor unit 120 (such as acceleration sensor information and/or gyro sensor information) for determining whether the camera has been shaken. If the user releases the shutter button in the preview mode, the AP 140 analyses the shooting information of a predetermined frame (in the case that the zero shutter lag function is activated, the shooting information of the frame being buffered at the shutter button release timing) to determine the presence of shaking. At this time, if the shaking value as the sensor information analysis result is equal to or less than a predetermined threshold value, the AP 140 stores the compressed image of the corresponding frame and, otherwise if the shaking value is greater than the predetermined threshold value, analyses the shooting information of the previous frame to determine the presence of shaking. While repeating this process, the AP 140 analyses the shooting information of the frames in sequence to store the compressed image of the frame having a shake value equal to or less than the predetermined threshold value.

Fourth, it is possible to implement the auto-setting function of the camera apparatus by accumulating and analysing shooting information value such as embedded data. The shooting information as shown in Table 1 is generated at every frame and stored in the storage unit 150. Also, it is possible to configuring the camera setting automatically to fit the user environment in advance by analysing the shooting information value such as embedded data generated at every frame. For example, it is possible to analyse the embedded data of 100 previous frames to acquire the optimized frames per second (fps) rate, exposure value (ev), scene mode, effect ISO values, etc. that can be applied automatically.

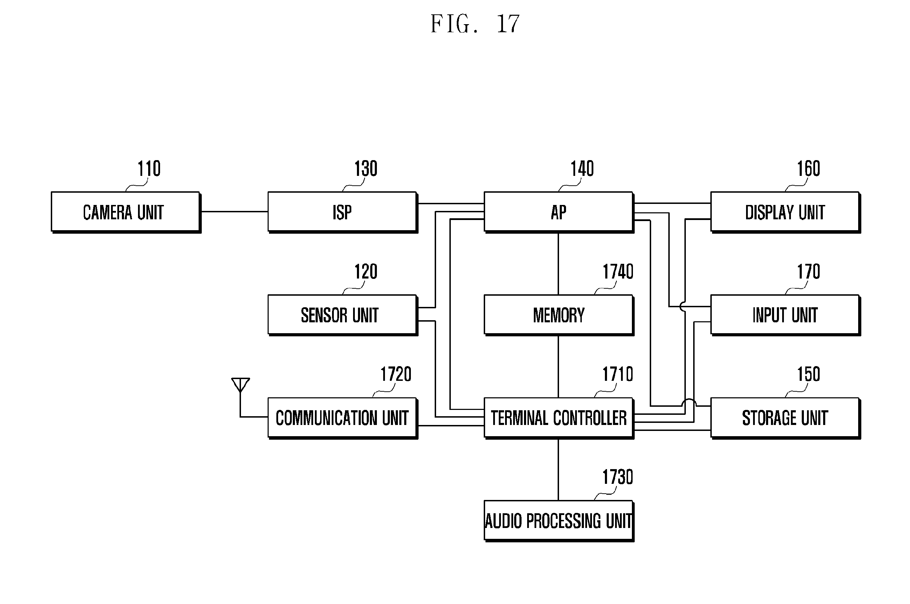

FIG. 17 is a block diagram illustrating the configuration of a portable terminal equipped with a camera apparatus according to another alternative exemplary embodiment of the present invention.

Referring to FIG. 17, the camera unit 110 is provided with a sensor which is responsible for acquiring an image when the camera operates. The sensor unit 120 may include at least one sensor mounted on the portable terminal, the sensor being at least one of a GPS receiver, a gyro sensor, an acceleration sensor, an altitude sensor, an orientation sensor, and an illumination sensor. Here, the sensor unit 120 can be connected to the ISP 130 as shown in FIGS. 1 and 3 or the AP 140 as shown in FIGS. 6 and 7, or some sensors of the sensor unit 120 are connected to the ISP 130 while other sensors of the sensor unit 120 are connected to the AP 140. In the following description of exemplary embodiments of the present invention, the sensor unit 120 is connected to the AP 140.

The ISP 130 processes the image acquired from the camera unit 110 to generate the viewing images to be presented on the display unit 160, the compressed images to be stored in response to the capture request, and the shooting information related to the images of the corresponding frame. For example for illustrative purposes only, the viewing images can be YUV images, and the compressed images can be JPEG images. The shooting information includes the exif information acquired when the camera unit 110 takes images and other information including the output of the sensor unit 120. The ISP 130 is capable of generating the viewing and compressed images and the shooting information at the frame rate of 30 fps (30 frames per second) or higher (e.g. 60 fps).

The AP 140 performs various application functions of the portable terminal. The AP 140 receives the output of the sensor unit 120 and is capable of processing various sensor applications in response to the user request. For example, it is possible to execute the navigation function and location-based local information search application with the output of the GPS receiver and the application operating the predetermined functions according to the movement of the terminal apparatus. In particular, in the exemplary embodiment of the present invention, the AP 140 is capable of controlling to buffer the viewing and compressed images or the viewing and compressed images and the shooting information generated by the ISP 130 at every frame and display the viewing image on the display unit 160 while the camera operates and stores the image selected among the compressed images being buffered in the storage unit 150 when the user's capture request command is input. The AP 140 merges the first shooting information generated by the ISP 130 and the second shooting information generated by the sensors of the sensor unit 120 into the final shooting information being buffered.

The communication unit 1720 is responsible for communication functions with external devices and base stations. The communication unit 1720 may include a transmitter having a frequency up-converter for up-converting the transmit signal to RF band signal and an amplifier for amplifying the up-converted signal and a receiver having a low noise amplifier for low noise amplifying the received RF signal and a frequency down converter for down-converting the RF signal to the baseband signal. The communication unit 1720 may also include a modulator for modulating the transmit signal and for transferring the modulated signal to the transmitter and a demodulator for demodulating the signal output by the receiver. Here, the modulator/demodulator may include at least one of WCDMA, GSM, and LTE mode modems and/or Wi-Fi and Wibro mode modems.

The terminal controller 1710 controls overall operations of the portable terminal and manages the voice call and data communication functions. Here, the terminal controller 1710 may include the modulator/demodulator of the communication unit 1720 and, in this case, the communication unit 1720 may include only the RF communication part. In this case, the terminal controller 1710 is responsible for signal modulation/demodulation and coding/decoding functions. The audio processing unit 1730 is connected to the transmitter/receiver of the portable terminal apparatus for processing the voice signal in a voice communication session under the control of the terminal controller 1710. The memory 1740 can be a work memory for loading the programs of the terminal controller 1710 and the AP 140 and, in this case, the memory 1740 can be implemented with Random Access Memory (RAM) for storing data, programs, applications, operating systems, and other information.

The input unit 170 generates various function execution commands and data input signals to the terminal controller 1610 and the AP 140. In particular, the input unit 170 is capable of generating the camera drive command and capture command to the AP 140. The input unit 170 is also capable of generating the command for displaying the shooting information and/or thumbnail images in response to the user input. The display unit 1670 displays the portable terminal apparatus' operations and application execution status under the control of the terminal controller 1710 and the AP 140. In particular, in the exemplary embodiment of the present invention, the display unit 160 displays the viewing image output by the AP 140 in the preview mode. The display unit 160 is also capable of displaying the shooting information and/or thumbnail images output by the AP 140 and corresponding to the captured images. Here, the input unit 170 can be a touch panel capable of detecting a user's touch input, and the display unit 160 can be an LCD panel or OLED panel for displaying data and images generated by the execution of a program. Here, the input unit 170 and the display unit 160 can be integrated into a touchscreen. The input unit 170 may include buttons arranged on or extending from an exterior of the camera apparatus.

The storage unit 150 may include a program memory for storing programs associated with the operation of the portable terminal apparatus and the programs according to the exemplary embodiment of the present invention and a data memory for storing data associated with the program execution and generated while the programs are running. The storage unit 150 may include the non-volatile memory such as flash memory. In particular, in the exemplary embodiment of the present invention, the storage unit 150 stores the compressed images being buffered by the AP 140 when the capture request is detected.

The portable terminal configured as shown in FIG. 17 is capable of providing voice call and data communication services and processing the images taken by the camera unit 110 in a camera-shooting mode according to the exemplary embodiment of the present invention. When the portable terminal powers on or operates a specific function, the terminal controller 1710 loads the programs for voice calls and data communications and other application programs of the portable terminal apparatus in the memory 1740. If the AP 140 is requested to execute an application, the AP 140 loads the programs for operating the corresponding application from the storage unit 150 to the memory 1740. Accordingly, the memory 1740 is capable of operating as a work memory for loading the operation programs of the portable terminal apparatus and application programs. Here, the memory 1740 can be shared by the AP 140 and the terminal controller 1710 or divided into separate parts for the AP 140 and the terminal controller 1710.

According to the exemplary embodiment of the present invention, the AP 140 processes the image processing application of the camera and various applications of the portable terminal. In order to process the various applications, the AP 140 is capable of receiving the output of the sensor unit 120 to execute an application based on the output of the sensor unit 120 or to control the application processing operation based on the output of the sensor unit 120. The terminal controller 1710 is also capable of receiving the output of the sensor unit 120, executing voice call and data communication services, and controlling the voice call and data communication services based on the output of the sensor unit 120.

When an outbound call is placed, the user is capable of inputting the recipient's phone number and a call placement request signal, and the terminal controller 1710 establishes a call session by using the communication unit 1720 and controls the outbound call processing with the base station upon detection of the call placement signal. Also, if an inbound call is detected by using the communication unit 1720, the terminal controller 1710 controls the audio processing unit 1730 to output an inbound call alarm and the display unit 160 to display the inbound call information. At this time, if the user inputs a response by using the input unit 170, the terminal controller 1710 controls the communication unit 1720 to establish an inbound call channel to provide the voice call service. In the case of a data communication, the communication channel is established in a similar manner to the establishing of the voice call channel.

The portable terminal is also capable of executing other applications. At this time, if the user requests for execution of a specific application through the input unit 170, the AP 140 executes the corresponding application and displays the execution result on the display unit 160. If the user inputs a camera operation request command, the AP 140 detects the command and controls the ISP 130 to drive the camera unit 110. The ISP 130 processes the images taken by the camera unit 110 at every frame to generate the viewing and compressed images and the shooting information from the output of the camera unit 110 and the sensor unit 120. The AP 140 controls to buffer the viewing and compressed images and the shooting information generated at every frame and display the viewing images on the display unit 160 as preview images. If the camera operation request is input, the portable terminal buffers the viewing images, the compressed images, and the shooting information, respectively, while displaying the viewing image on the display unit 160 as preview images. At this time, the AP 140 is capable of buffering a predetermined number of frame images (compressed and viewing images) and information (shooting information).

If the user inputs a capture command by using the input unit 170 in the above state, the AP 140 selects the compressed image of the frame, at the time when the capture request is detected, among the compressed images being buffered and stores the selected image in the storage unit 150. Since the AP 140 stores the compressed image selected at the shutter-on timing (i.e. when the shutter is pushed up or is opened), it is possible to realize the zero shutter lag. At this time, the AP 140 is capable of displaying the thumbnail images corresponding to the compressed images being stored in the state that the viewing images are displayed on the display unit 160 or, in contrast, capable of displaying the thumbnail images corresponding to the viewing images on the display unit 160 in the form of a motion image in the state that the viewing images corresponding to the compressed images are stored.

The image taken at the shutter-on timing in response to the capture command may not be satisfactory. That is, if the camera is shaken at the shutter-on timing or the images are taken with the assistance of the flash, the images taken before or after the shutter-on timing or flash-emission timing may be more satisfactory than that taken at the shutter-on timing or the flash-emission timing. In this case, the user is capable of configuring the flash function and shake detection function in the program registration, settings, or configuration mode. If the capture request is detected in the state that the flash function is configured, the AP 140 checks the flash information of the shooting information to store the compressed image of the frame configured with the full-light emission value. In the case that the shake detection function is configured, the AP 140 analyses the movement sensor information of the shooting information of the frame at the shutter-on timing to determine the presence of shake and, if a shake is detected, determines the presence of shake at the next frame (frames before and after the shutter-on frame) such that the compressed images of the frame having no shake are stored in the storage unit 150.

In the exemplary embodiment of the present invention, a part of the shooting information can be generated by the AP 140. For example, if the AP 140 processes the output of the sensor unit 120, the ISP 130 processes the output of the camera unit 110 to generate the viewing and compressed images and the shooting information of the camera unit 110, and the AP 140 buffers the viewing images and the compressed images and generates the final shooting information from the shooting information provided by the ISP 130 and the sensor information measured at shooting timing which is output by the sensor unit 120, with the final shooting information being buffered. At this time, the viewing images, the compressed images, and the shooting information are synchronized among each other in a single frame with a frame count value such that the AP 140 is capable of processing the viewing and compressed images and the shooting information synchronized in a single frame with the frame count number.

The above-described methods according to the present invention can be implemented in hardware, firmware, as software or computer code, or a combination of hardware and software. The software can be stored in a recording medium such as a CD ROM, an RAM, a floppy disk, a hard disk, or a magneto-optical disk or downloaded over a network and stored on a non-transitory machine readable medium, so that the methods described herein can be rendered in such software using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Although exemplary embodiments of the present invention have been described in detail hereinabove with specific terminology, this is for the purpose of describing particular embodiments only and not intended to be limiting of the invention. While particular embodiments of the present invention have been illustrated and described, it would be obvious to those skilled in the art that various other changes and modifications can be made without departing from the scope of the invention as defined by the appended claims.

## Claims

1. An image-taking method, the method comprising:
acquiring images from a camera unit at a frame rate with one image per frame period;
converting the acquired images to viewing images and compressed images; and
buffering the compressed images while displaying the viewing images on a display unit.

2. The method of claim 1, wherein converting the acquired images comprises generating shooting information for each image, the method further comprising buffering the shooting information.

3. The method of claim 2, wherein the shooting information includes image shooting information generated by the camera unit or information generated by a sensor separate from the camera unit.

4. The method of any one of the preceding claims, further comprising storing a selected compressed image as a captured image for a predetermined frame among the buffered compressed images in response to a capture request.

5. The method of claim 2 or claim 3, further comprising storing a selected compressed image as a captured image and corresponding shooting information for a predetermined frame among the buffered compressed images in response to a capture request.

6. The method of claim 4 or claim 5, wherein the predetermined frame is selected to be a frame having a zero shutter lag.

7. The method of any of claims 1 to 3, further comprising:
displaying thumbnail images corresponding to the buffered compressed images in response to a capture request; and
storing a compressed image as a captured image corresponding to a thumbnail image selected by a user among the displayed thumbnail images.

8. The method of any one of claims 1 to 3, further comprising:
displaying shooting information corresponding to the buffered compressed images in response to a capture request; and
storing a compressed image as a captured image corresponding to shooting information selected by a user among the displayed shooting information.

9. The method of any of the preceding claims, wherein the viewing images are YUV images, and the compressed images are JPEG images in a predetermined JPEG format.

10. A camera apparatus comprising:
a camera unit arranged to acquire images at a frame rate with one image per frame period;
a processing unit arranged to convert the acquired images to viewing images and compressed images and to buffer the compressed images; and
a display unit arranged to display the viewing images output by the application processor.

11. The camera apparatus of claim 10, further comprising:
an input unit arranged to generate a camera drive signal and a capture request signal and to supply the camera drive signal and the capture request signal to the processing unit; and
a storage unit;
wherein the processing unit is further arranged to select a compressed image of a predetermined frame among the buffered compressed images in response to the capture request signal; and
wherein the storage unit is arranged to store the selected compressed image as a captured image.

12. The camera apparatus of claim 10 or claim 11, wherein the processing unit comprises an image signal processor and an application processor, and the image signal processor comprises:
an image processing part arranged to process the acquired images from the camera unit;
a compression coder arranged to compress the acquired images output by the image processing part to generate the compressed images;
a scaler arranged to process the acquired images output by the image processing part to generate the viewing images;
an image processing controller arranged to control the operation of the camera unit and to generate the shooting information with setting information of the camera unit at an image acquisition time; and
a multiplexer arranged to multiplex the viewing images and the compressed images to generate a multiplexed signal under the control of the image processing controller.

13. The camera apparatus of claim 12, wherein the application processor comprises:
a demultiplexer arranged to demultiplex the multiplexed signal;
a viewing image buffer arranged to buffer the demultiplexed viewing images;
a compressed image buffer arranged to buffer the demultiplexed compressed images; and
an application processing controller arranged to output the viewing images to the display unit and to store a selected compressed image as a captured image for a predetermined frame selected to be a frame having zero shutter lag in response to a capture request.

14. The camera apparatus of claim 13, further comprising at least one sensor:
wherein the image processing controller is further arranged to generate first shooting information with camera setting information and information of the acquired images and to transmit the first shooting information with the viewing images and the compressed images as a multiplexed signal; and
wherein the application processor includes a shooting information buffer and is arranged to merge first shooting information output by the image processor and second shooting information sensed by the at least one sensor to be buffered as the shooting information in the shooting information buffer.

15. The camera apparatus of claim 13 or claim 14, wherein the application processor further comprises a thumbnail generator arranged to generate thumbnail images using the viewing images; and
wherein the application processing controller is further arranged to display the thumbnail images on the display unit and to store, in the storage unit as a captured image, a selected compressed image of a frame corresponding to a thumbnail image selected in response to a capture request signal generated by the input unit.
